# EUROPEAN PATENT SPECIFICATION

(11) **EP 3 459 310 B1**
(45) Date of publication and mention of the grant of the patent: **04.05.2022**
(21) Application number: 16728168.2
(22) Date of filing: 20.05.2016
(51) Int. Cl.: H04W 72/12, H04W 28/08

(54) **OPTIMIZED SCHEDULING STRATEGIES FOR DUAL CONNECTIVITY AND LINK AGGREGATION**
OPTIMIERTE PLANUNGSSTRATEGIEN FÜR DUALE KONNEKTIVITÄT UND VERBINDUNGSAGGREGATION
STRATÉGIES DE PLANIFICATION OPTIMISÉES POUR DOUBLE CONNECTIVITÉ ET GROUPEMENT DE LIAISON

(43) Date of publication of application: 27.03.2019
(73) Proprietor: Apple Inc., Cupertino, CA 95014 (US)
(72) Inventor: KUGLER, Martin, 85586 Poing (DE); KALB, Thorsten, 80995 Munich (DE)
(74) Representative: Lang, Johannes
(86) International application number: PCT/US2016/033608
(87) International publication number: WO 2017/200554

(56) References cited:
- ERICSSON: "PDCP reordering in dual connectivity", 3GPP DRAFT; R2-141760 - PDCP REORDERING IN DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 1 April 2014 (2014-04-01), XP050792896, Retrieved from the Internet: URL:http://www.3gpp.org/ftp/Meetings_3GPP_ SYNC/RAN2/Docs/ [retrieved on 2014-04-01]
- ZTE: "Stop condition for temporary reordering", 3GPP DRAFT; R2-144244 STOP CONDITION FOR TEMPORARY REORDERING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Shanghai, China; 20141006 - 20141010 5 October 2014 (2014-10-05), XP050876480, Retrieved from the Internet: URL:http://www.3gpp.org/ftp/Meetings_3GPP_ SYNC/RAN2/Docs/ [retrieved on 2014-10-05]
- MEDIATEK INC: "PDCP Discard", 3GPP DRAFT; R2-153237 DISC PDCP DISCARD V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Beijing, China; 20150824 - 20150828 23 August 2015 (2015-08-23), XP051003994, Retrieved from the Internet: URL:http://www.3gpp.org/ftp/Meetings_3GPP_ SYNC/RAN2/Docs/ [retrieved on 2015-08-23]
- ERICSSON: "PDCP feedback and flow control", 3GPP DRAFT; R3-141325, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Seoul, South Korea; 20140519 - 20140523 18 May 2014 (2014-05-18), XP050795871, Retrieved from the Internet: URL:http://www.3gpp.org/ftp/Meetings_3GPP_ SYNC/RAN3/Docs/ [retrieved on 2014-05-18]

## Description

The present invention relates to the technical field of wireless mobile communication technology. Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in an uplink (UL) transmission. Standards and protocols that use orthogonal frequency-division multiplexing (OFDM) for Signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as Wi-Fi. In 3GPP radio access network (RAN) LTE systems, the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

In addition, a wireless multiple-access communications system may include a number of eNodeBs, each simultaneously supporting communication for multiple mobile devices. The eNodeBs may communicate with mobile devices an downstream and upstream links. In some wireless networks, a user equipment (UE) may be capable of supporting multiple wireless technologies concurrently. For example, a UE may simultaneously transmit data over a wireless local area network (WLAN) link and a Long Term Evolution (LTE) link. However, current scalability, deployment, functionality, and protocols for communication between the UE and the eNodeB and/or the WLAN can be inefficient to meet the current demands. For example, challenges arise in sending data by different sources over independent links or different radio access technologies (RATs).
ERICSSON: "PDCP reordering in dual connectivity", vol. RAN WG2, no. Valencia, Spain; 20140331 - 20140404, 1 April 2014 (2014-04-01), discloses a window-based scheme allowing an MeNB to adjust quickly to any kind of congestion no matter whether it occurs in the SeNB or on X2.
ZTE: "Stop condition for temporary reordering", vol. RAN WG2, no. Shanghai, China; 20141006 - 20141010, 5 October 2014 (2014-10-05), criticizes that temporary reordering state is started after UE receiving RRC connection reconfiguration message and that UE actually doesn't know exactly when temporary reordering is ended. MEDIATEK INC: "PDCP Discard", vol. RAN WG2, no. Beijing, China; 20150824 - 20150828 23 August 2015 (2015-08-23) observes that PDCP discard can happen on legacy bearer, i.e. MCG bearer. Expect PDPC reestablishment, a) PDCP is expected to send PDU in ascending order to RLC and expects b) in-sequence delivery from RLC, therefore, whenever PDCP receives a PDCP PDU with SN gap, it simply assumes that the missing PDU is discarded at transmitting side. Therefore, PDCP discard can be detected and handled by the receiving side with such simple implementation solution. In response, a variety of proposals for this are made.
ERICSSON: "PDCP feedback and flow control", vol. RAN WG3, no. Seoul, South Korea; 20140519 - 20140523 18 May 2014 (2014-05-18) describes flow control and PDCP feedback between SeNB and MeNB.
Thus, a desire exits for a solution to provide functionality and protocols scalable and efficient to meet the constraints for communication between the UE and the eNodeB and/or the WLAN.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 depicts an illustrative wireless communications system in accordance with an example;
FIG. 2 illustrates a non-collocated long-term evolution (LTE) and wireless local area network (WLAN) aggregation (LWA) architecture in accordance with an example;
FIG. 3A illustrates a collocated long-term evolution (LTE) and wireless local area network (WLAN) aggregation (LWA) radio protocol architecture in accordance in accordance with an example;
FIG. 3B illustrates a non-collocated long-term evolution (LTE) and wireless local area network (WLAN) aggregation (LWA) radio protocol architecture in accordance in accordance with an example;
FIG. 4 illustrates an optimized scheduling strategy using odd and even sequence numbers (SN) on a first lower link and a second lower link in accordance with an example;
FIG. 5 illustrates an optimized scheduling strategy using modulo operations on a first lower link and a second lower link in accordance with an example;
FIG. 6 illustrates an optimized scheduling strategy using a scheduling bitmap on a first lower link and a second lower link in accordance with an example;
FIG. 7 illustrates an optimized scheduling strategy using redundant scheduling on a first lower link and a second lower link in accordance with an example;
FIG. 8 depicts functionality of an eNodeB to use optimized scheduling strategies for dual connectivity and long-term evolution (LTE) and wireless local area network (WLAN) aggregation (LWA) within a wireless communication network in accordance with an example;
FIG. 9 depicts functionality of a user equipment (UE) to use optimized scheduling strategies for dual connectivity and long-term evolution (LTE) and wireless local area network (WLAN) aggregation (LWA) within a wireless communication network in accordance with an example;
FIG. 10 depicts functionality of an eNodeB to use optimized scheduling strategies for dual connectivity and long-term evolution (LTE) and wireless local area network (WLAN) aggregation (LWA) within a wireless communication network in accordance an example;
FIG. 11 illustrates a diagram of example components of a wireless device (e.g. User Equipment "UE") device in accordance with an example;
FIG. 12 illustrates a diagram of example components of a User Equipment (UE) device in accordance with an example; and
FIG. 13 illustrates a diagram of a node (e.g., eNB) and wireless device (e.g., UE) in accordance with an example.

### SUMMARY OF THE INVENTION

The invention of the present disclosure is described in the independent claims. Optional embodiments are disclosed by the claims dependent thereon.

### DETAILED DESCRIPTION

Reference will now be made to the exemplary embodiments illustrated, and specific language will be used herein to describe the same. It will nevertheless be understood that no limitation of the scope of the technology is thereby intended.

Before the present technology is disclosed and described, it is to be understood that this technology is not limited to the particular structures, process actions, or materials disclosed herein, but is extended to equivalents thereof os would be recognized by those ordinarily skilled in the relevant arts. It should also be understood that terminology
employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

In one aspect, the present technology provides for third generation partnership project (3GPP) long-term evolution (LTE) dual connectivity and/or long-term evolution (LTE) and wireless local area network (WLAN) aggregation (LWA) (e.g., mobile data offload or "Wi-Fi Offloading").

In one aspect, dual connectivity, or inter-EUTRANodeB carrier aggregation (CA), can refer to the use of multiple carriers at different frequencies, referred to as component carriers (CCs). There can be a serving cell for each component carrier with one serving cell designated as the primary cell (PCell) and the rest as secondary cells (SCells). In dual connectivity, the serving cells can be operated in different eNBs (evolved Node Bs). One of the eNBs may be a macro cell eNB, while the other is a small cell eNB. For example, a primary cell may be served from the macro cell, and a secondary cell may be served from the small cell. In one aspect, mobile data offloading can be defined as the use of complementary network technologies for delivering data originally targeted for cellular networks. In one aspect, LWA can be an alternative to LTE and WLAN interworking by providing data aggregation at a radio access network (RAN), where an Evolved NodeB (eNB) can schedule packets (e.g., packet data units "PDUs") to be served on LTE and Wi-Fi radio links. An advantage of LWA is that LWA can provide increased control and utilization of resources on both links (e.g., LTE links and Wi-Fi radio links). LWA can increase the aggregate throughput for all users and improve the total system capacity by better managing the radio resources among users.

However, in dual connectivity or LWA there can occur reordering and/or timing issues on a receiver side (e.g., the UE) in a packet data convergence protocol (PDCP) layer in the UE, since downlink packets are sent by different sources over independent links or even different radio access technologies, with specific transmissions delays. For example, on the receiver side (e.g., the UE), the PDUs can be constrained to be merged and/or reordered according to sequence numbers which are part of the PDU headers. However, a UE is unable to predict on which link the downlink (DL) PDU with the next sequence number (SN) may be received. Moreover, in case of a dropped or lost packet on one link, a UE is unable to reliably estimate whether or not the dropped or lost packet will be sent on the other link or even determine or estimate if the packet was actually dropped. The inability to determine if a packet was dropped in a timely manner can lead to inefficiencies and delays. Thus, in one aspect, a supervisory timer mechanism can be used. However, the supervisory timer mechanism can also cause complex design implementation efforts and can also delay forwarding packets to upper layers. As such, the present technology provides a solution to reduce or eliminate these and other drawbacks.

The present technology provides for predictable and optimized scheduling strategies for a PDCP on sending side (eNB). The sending side can indicate the predictable and optimized scheduling strategy to the receiver (e.g., the UE).

In one aspect, the present technology provides for optimized scheduling strategies for dual connectivity and LWA. In one aspect, the sending side (eNB) at the PDCP level can decide based on different values, such as, for example, a link load, a numbers of users on each link, which scheduling strategy should be used. The sending side (eNB) can indicate a selected or preferred optimized scheduling strategy to a PDCP in a UE. The sending side (eNB) can then execute a data transfer on one of a plurality of lower link layers based on the selected/preferred optimized scheduling strategy. In one aspect, if the sending side (eNB) selects to change the selected/preferred optimized scheduling strategy, the new selected/preferred optimized scheduling strategy can be indicated to the UE accordingly.

In one aspect, on the receiving side (e.g., the UE), the PDCP of the UE can collect the received packets and can merge the two packet streams from both links, such as a first lower layer link and a second lower layer link, according to the PDU sequence numbers. Thus, the present technology provides a solution for optimized scheduling strategy scheme that is more efficient and can be known by the UE.

That is, the optimized scheduling strategy enables the UE to predict on which, of multiple radio links, the downlink (DL) PDU with the next sequence number (SN) may be received. The optimized scheduling strategy can also be used to reliably estimate whether or not the dropped or lost packet will be sent on the other link or even determine or estimate if the packet was actually dropped. Thus, the optimized scheduling strategy can be used to increase efficiency and reliability by recognizing dropped packets.

The present technology provides for an eNodeB to perform optimized scheduling strategies for dual connectivity and LWA with a user equipment (UE) within a wireless communication network. The eNodeB can determine and/or select one or more scheduling strategies for communicating one or more packet data units (PDUs) from a packet data convergence protocol (PDCP) layer to a plurality of lower link layers for communication to the UE. The eNodeB can associate each one of the one or more PDUs with a sequence number (SN). The eNodeB can signal a transceiver of the eNodeB to transmit, to the UE, the one or more PDUs and associated sequence numbers (SNs) on the plurality of lower link layers according to the one or more scheduling strategies to enable the UE to identify a dropped packet source from the plurality of lower link layers based on the one or more scheduling strategies.

The present technology provides for a UE to perform optimized scheduling strategies for dual connectivity and LWA with an eNodeB within a wireless communication network. The UE can process one or more scheduling strategies, received from the eNodeB, for receiving one or more packet data units (PDUs) from a packet data convergence protocol (PDCP) layer to a plurality of lower link layers for communication with the eNodeB. Each one of the one or more PDUs can be associated with a sequence number (SN). The UE can signal a transceiver of the UE to receive the one or more PDUs and associated sequence numbers (SNs) on the plurality of lower link layers according to the one or more scheduling strategies.

The present technology provides for an eNodeB to perform optimized scheduling strategies for dual connectivity and LWA with a user equipment (UE) within a wireless communication network. The eNodeB can select one or more scheduling strategies for communicating one or more packet data units (PDUs) from a packet data convergence protocol (PDCP) layer to a plurality of lower link layers for communication to the UE. The eNodeB can associate each one of the one or more PDUs with a sequence number (SN). The eNodeB can signal a transceiver of the eNodeB to transmit to the UE an indication to use the one or more scheduling strategies. The eNodeB can process an acknowledgment that the UE received the indication. The eNodeB can signal a transceiver of the eNodeB to transmit to the UE the one or more PDUs and associated sequence numbers (SNs) on the plurality of lower link layers according to the one or more scheduling strategies.

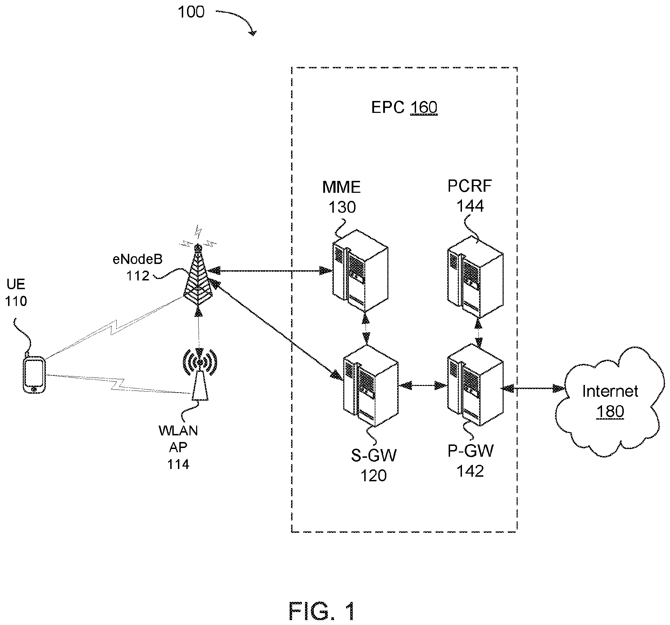

FIG. 1 illustrates an example of one type of wireless network 100 operable to communicate based on a 3GPP LTE standard. In this example, a node can be illustrated and be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE) 110. As depicted in FIG. 1, the node is illustrated, by way of example only, as an eNodeB 112. Downlink (DL) transmission can be a communication from the eNodeB 112 (e.g., the node) to the wireless device (e.g., UE 110), and the uplink (UL) transmission can be a communication from the wireless device (e.g., UE 110) to the eNodeB 112 (e.g., the node).

The eNodeB 112 can include one or more antennas, one or more radio modules to modulate and/or demodulate signals transmitted or received on an air interface, and one or more digital modules to process signals transmitted and received on the air interface. The eNodeBs can be a relatively high power node, referred to as a "macro node" or a relatively low power node (LPN). An LPN can include a micro node, pico node, home eNB (HeNB), remote radio head (RRM), remote radio entity (RRE), and the like.

The eNodeB 112 can provide communication coverage for a particular geographic area. The term "cell" can refer to a coverage area of an eNB 112 and/or an eNB subsystem serving this coverage area. The UE can also be in communication with a wireless local area network (WLAN) access point 114. The eNodeB 112 and the WLAN can be included within a radio access network and in communication with an evolved packet core (EPC) 160.

The EPC 160 can include a serving gateway (S-GW) 120 and a mobility management entity (MME) 130. The EPC 160 can also include a packet data network (PDN) gateway (P-GW) 142 to couple a serving gateway (S-GW) 120 to the PDN, such as the Internet 180, an intra-net, or other similar network. The S-GW can provide Internet network access and standard network access for the mobile devices associated with the RAN. The S-GW 120 and MME 130 can be in direct communication with each other via cabling, wire, optical fiber, and/or transmission hardware, such a router or repeater. The eNodeB 112 can be connected to one or more user equipments (UE) 110, and the WLAN AP 114, respectively. The eNodeB 112 can be in direct communication with the EPC 160 and each of the components within the EPC 160.

The EPC 160 can also include a policy and charging rules function (PCRF) node 144 that can be used to determine, in near real time, policy rules in the wireless network. The PCRF node can access subscriber databases and other specialized functions, such as charging systems, as can be appreciated.

In one aspect, the UE 110 can communicate with a wireless local area network (WLAN) access point (AP) 114. The eNodeB 112 can also be in communication with the WLAN AP 114. In one aspect, the eNodeB 112 and a WLAN AP 114 can provide the UE 110 with access to the evolved packet core 160 using different radio access technologies (RATs). For example, the eNodeB 112 can provide access to the evolved packet core 160 over LTE access technology, such as a 3GPP LTE air interface, and the WLAN AP 114 can provide access to the eNodeB 112.

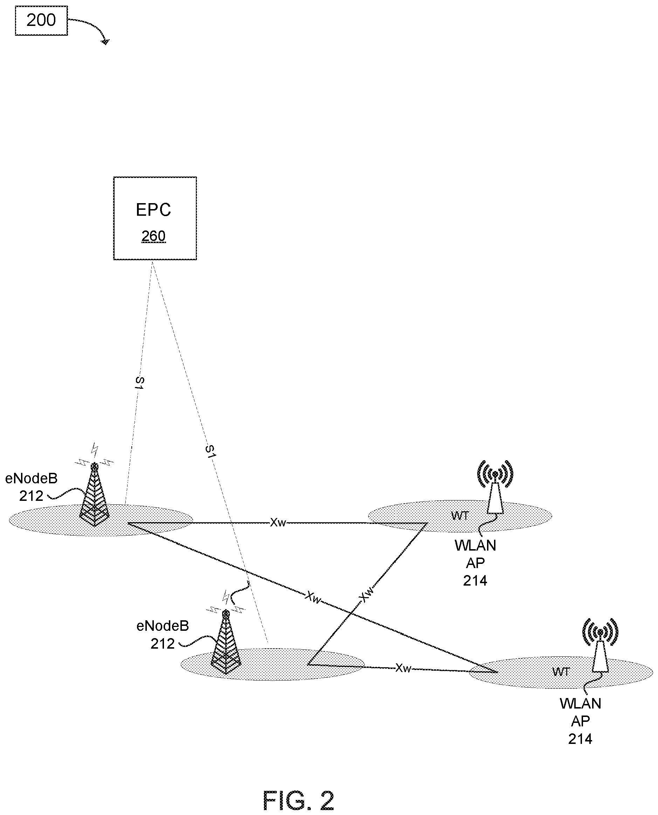

FIG. 2 illustrates a non-collocated long-term evolution (LTE) and wireless local area network (WLAN) aggregation (LWA) architecture in accordance with an example. In one aspect, one or more eNodeBs 212 and one or more wireless local area network (WLAN) access points (AP) 214 may be in communication with an evolved packet core (EPC) 260. Moreover, the eNodeB can perform an LTE-WLAN aggregation (LWA) operation whereby a UE in a radio resource control (RRC) CONNECTED state (e.g., RRC connection has been established) is configured by the eNB to utilize radio resources of LTE and WLAN. In one aspect, a collocated long-term evolution (LTE) and wireless local area network (WLAN) aggregation (LWA) architecture can involve two scenarios, depending on the backhaul connection between the LTE and the WLAN. First, the long-term evolution (LTE) and wireless local area network (WLAN) aggregation (LWA) architecture can support a non-collocated LWA scenario for a non-ideal backhaul. Second, the LWA architecture can support a collocated LWA scenario for an ideal/internal backhaul.

In one aspect, in the non-collocated LWA scenario, the eNB 212 can be connected to one or more WLAN Terminations (WT) 114 via an Xw interface. In contrast, in the collocated LWA scenario, the interface between LTE and WLAN can be based and dependent upon the wireless network implementation.

In one aspect, as depicted in FIG. 2, an architecture for the non-collocated LWA scenario is illustrated where the WT (e.g., WLAN AP 214) terminates at the Xw interface for WLAN. The eNodeB can communicate with the EPC 260 via the S1 interface. It should be noted that WT can be a logical node and 3GPP LTE does not specify where the WT is implemented.

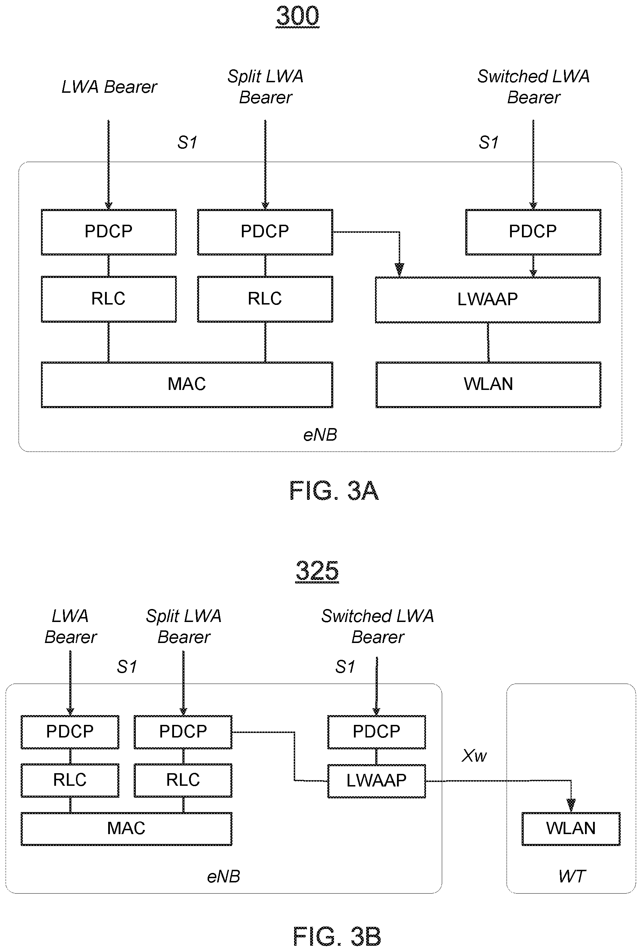

Tuning now to FIGs. 3A-3B, a collocated long-term evolution (LTE) and wireless local area network (WLAN) aggregation (LWA) radio protocol architecture 300 and a non-collocated long-term evolution (LTE) and wireless local area network (WLAN) aggregation (LWA) radio protocol architecture 325 is depicted. It should be noted that in the 3GPP LTE air interface, also referred to as the radio interface or radio access network (RAN), a layered protocol architecture can be used where peer layers of the UE and eNB pass protocol data units (PDUs) between each other that are encapsulated service data units (SDUs) of the next higher layer. The topmost layer in the user plane is the packet data compression protocol (PDCP) layer which transmits and receives IP (internet protocol) packets. The topmost layer of the control plane in the access stratum between the UE and eNB can be the radio resource control (RRC) layer. The PDCP layer communicates with the radio link control (RLC) layer via radio bearers to which IP packets are mapped. At the medium access control (MAC) layer, the connection to the RLC layer above is through logical channels, and the connection to the physical layer below is through transport channels. The MAC layer handles multiplexing/demultiplexing between the logical channels, hybrid- ARQ operations, and scheduling, the latter being performed solely at the eNB for both the uplink and the downlink.

For example, FIGs. 3A-3B can include elements of an evolved universal terrestrial radio access network (EUTRAN) protocol including, for example, a media access control (MAC) layer, a radio link control (RLC) layer, and a packet data convergence protocol (PDCP) layer. The EUTRAN protocols can communicate with a WLAN via an LTE-WLAN Aggregation Adaptation Protocol (LWAAP).

In one aspect, in LWA, the radio protocol architecture that a particular bearer uses can depend on the LWA backhaul scenario and how the bearer is set up, as indicated in FIG. 2. In one aspect, an E-UTRAN system can include eNodeBs, providing the E-UTRA user plane, which can include packet data convergence protocol (PDCP), radio link control (RLC), media access control (MAC) and the physical layer (PHY) (e.g., Layer 1) and control plane (RRC) protocol terminations towards the UE. In FIG. 3B, the LTE-WLAN Aggregation Adaptation Protocol (LWAAP) in an eNB can be in communication via an Xw interface with a WLAN Termination (WT), which can be a logical node that terminates the Xw interface on the WLAN side.

Different types of scheduling strategies can be used for communicating data from the PDCP layer to multiple different lower link layers. As previously discussed, the strategy that is selected can be based on a number of factors, including, for example, a link load, a number of users on each link, the system architecture, and so forth. Several example strategies are outlined in the proceeding paragraphs. These examples are not intended to be limiting. Additional strategies may be used by the eNB to communicate the data over multiple lower link layers. The strategy can then be communicated to the UE, to enable the UE to determine at which lower link layer selected PDUs will be received.

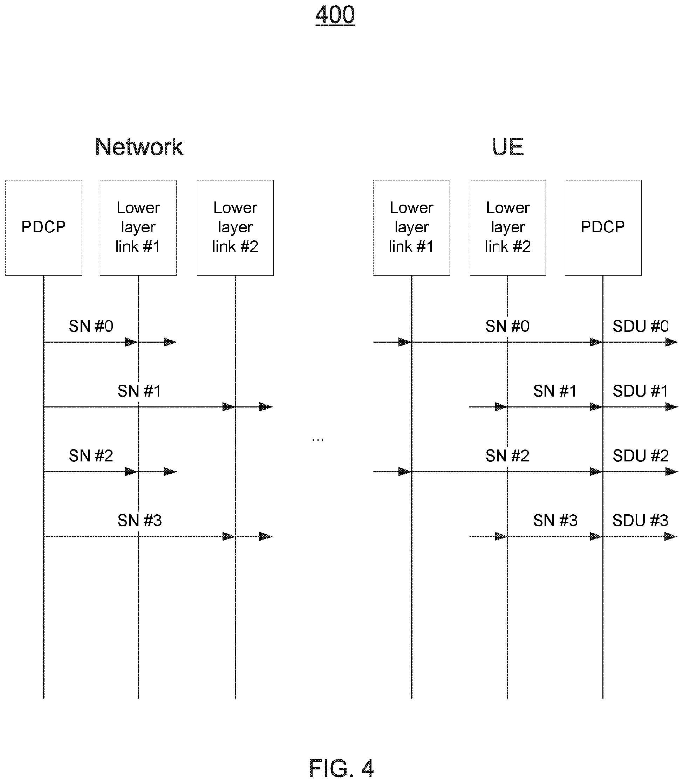

FIG. 4 illustrates an optimized scheduling strategy 400 using odd and even sequence numbers (SN) on a first lower link layer and a second lower link layer. In one aspect, FIG. 4 depicts an optimized scheduling strategy for two available links, such as lower layer link #1 and a lower layer link #2 between a PDCP of a network (e.g., an eNB) and a PDCP of the UE. In one aspect, FIG. 4 applies an alternating optimized scheduling strategy where one or more PDUs with odd sequence numbers (SN), such as, for example, SN#1 and SN #3, can be sent on a first lower layer link, such as lower layer link #1. Alternatively, one or more PDUs with even sequence numbers, such as, for example, SN#0 and SN#2, can be transmitted on the other link (as compared to lower layer link #1), such as, for example, lower layer link #2. The PDCP of the UE can send one more service data units (SDUs), such as, for example, SDU #0, SDU #1, SDU #3, and/or SDU #3 to a next higher layer. The optimized scheduling strategy using odd and/or even SNs can be used, for example, when a load on both links is similar or unknown. In short, FIG. 4 depicts a method to transmit, from the PDCP layer at the eNB to the PDCP layer of the UE, the one or more PDUs having odd sequence numbers on a first one of the plurality of lower link layers and to transmit to the UE the one or more PDUs having even sequence numbers on the second one of the plurality of lower link layers

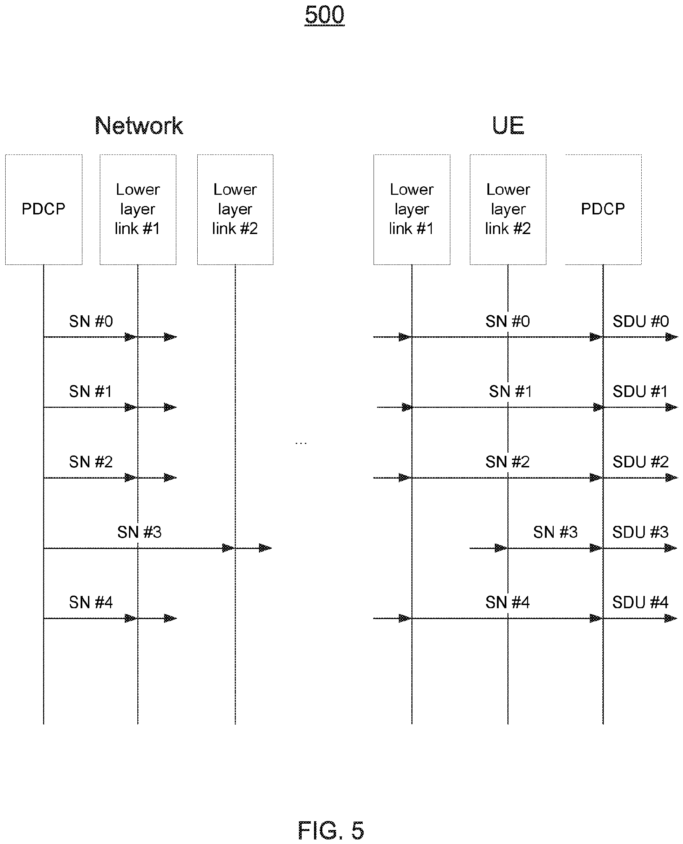

FIG. 5 illustrates an optimized scheduling strategy 500 using modulo operations on a first lower link and a second lower link. In one aspect, FIG. 5 depicts an optimized scheduling strategy with modulo operations for two available links, such as lower layer link #1 and a lower layer link #2 between a PDCP of a network (e.g., an eNB) and a PDCP of the UE. In one aspect, FIG. 5 applies a modulo operation based scheduling strategy where one or more PDUs with sequence numbers, which can be a multiple of a fixed number n, such as, for example, SN#0, SN#1, SN #2, and/or SN#4, can be sent on a first lower layer link, such as lower layer link #1, where n can be a positive integer. The remaining one or more PDUs, such as, for example, SN#3, can be sent on the other link, such as, for example, lower layer link #2.

In one aspect, the modulo operation can be equivalent to SN mod n = 0 or any other selected fixed number, such as a positive integer. It should be noted that when n is selected to be "0" (e.g., n equals 0 "n=0") the optimized scheduling strategy using modulo operations can be similar to the optimized scheduling strategy using odd and even sequence numbers (SN) on a first lower link and a second lower link, as described in FIG. 4. The PDCP of the UE can send one or more service data units (SDUs), such as, for example, SDU #0, SDU #1, SDU #3, and/or SDU #4 to a next higher layer. The optimized scheduling strategy using odd and even SNs can be used, for example, when a load on both links is similar or unknown.

That is, the optimized scheduling strategy using modulo operations depicts transmitting, to the UE, the one or more PDUs on a first one of the plurality of lower link layers having the SNs that are a multiple of an N fixed number, wherein N is a positive integer; or transmit to the UE the one or more PDUs on a first one of the plurality of lower link layers having the SNs that are a multiple of an M fixed number, wherein M is a positive integer.

In one aspect, there may be more than a plurality of lower layer links that are available. As such, the optimized scheduling strategy with modulo operations can separately define a modulo based rule for each link of the plurality of lower layer links. For example, if the plurality of lower layer links equals 3 links, a first rule can be defined where the first lower layer link, such as lower layer link #1, can be used for SN mod n = 0, where n is a positive integer. A second rule can be defined where the second lower layer link, such as lower layer link #2, can be used for SN mod m = 0, where m can be positive integer and m, n can be coprime. A third rule can be defined where the third lower layer link, such as lower layer link #3, can be used for all remaining SN. The PDCP of the UE can send one or more service data units (SDUs), such as, for example, SDU #0, SDU #1, SDU #2, SDU #3, and/or SDU #4 to a next higher layer.

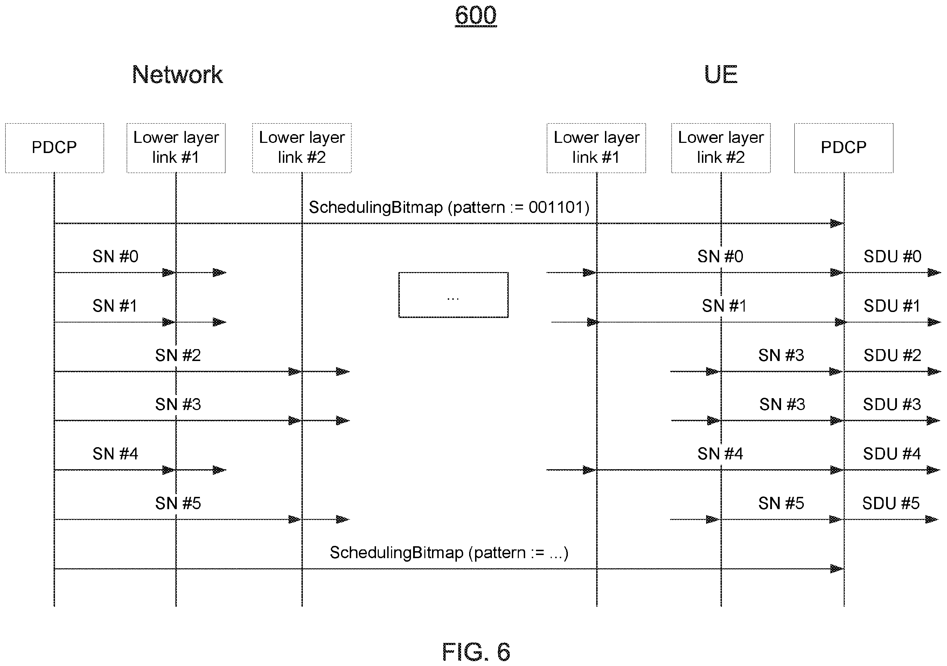

FIG. 6 illustrates an optimized scheduling strategy 600 using a scheduling bitmap on one of a plurality of lower layer links, such as a first lower link and a second lower link. In one aspect, FIG. 6 depicts a scheduling bitmap optimized scheduling strategy for two available links, such as lower layer link #1 and a lower layer link #2 between a PDCP of a network (e.g., an eNB) and a PDCP of the UE. In one aspect, the network (e.g., an eNB, EPC, or sender) can define a scheduling bitmap for one or more subsequent X PDUs, where X is a positive integer. The scheduling bitmap may be transmitted from the PDCP of the network (e.g., from the eNodeB) to the PDCP of the UE. The scheduling bitmap may also be communicated via RRC, a system information block (SIB), a master information block (MIB), or using another desired communication. In one aspect, the scheduling bitmap can define which PDUs are to be transmitted on a corresponding one of a plurality of lower layer links. For example, the scheduling bitmap can define '0' as means for representing a transmission of one or more of the PDUs is to occur on a first lower layer link, such as lower layer link #1. The scheduling bitmap can define '1' as representing a transmission of alternative ones of the one or more PDUs is to occur on an alternative lower layer link, such as lower layer link #2.

For example, one or more PDUs with sequence numbers (SN) having the scheduling bitmap indicating a "0", such as, for example, SN#0, SN#1, and SN #4, can be sent on a first lower layer link, such as lower layer link #1. Alternatively, one or more PDUs with sequence numbers (SN) having the scheduling bitmap indicating a "1", such as, for example, SN#2, SN#3, and SN #5, can be sent on a second lower layer link, such as lower layer link #2.

In one aspect, the same bitmap can be reused periodically, so that bitmap can remain small. Alternatively, the scheduling bitmap can be resent from the eNodeB to the UE when all PDUs are transmitted from the eNodeB to the UE, which PDUs were referred to in a previously sent scheduling bitmap.

In one aspect, FIG. 6 depicts the scheduling bitmap defined for an X number of the one or more PDUs. The scheduling bitmap can be used to transmit to the UE one or more PDUs on a first one of the plurality of lower link layers having an X bit, wherein X is a zero value or a positive integer; and transmit to the UE, using the scheduling bitmap, the one or more PDUs on the a second one of the plurality of lower link layers having an X bit, wherein Y is a non zero value or a positive integer. The PDCP of the UE can send one more service data units (SDUs), such as, for example, SDU #0, SDU #1, SDU #3, SDU #3, and/or SDU #4 to a next higher layer.

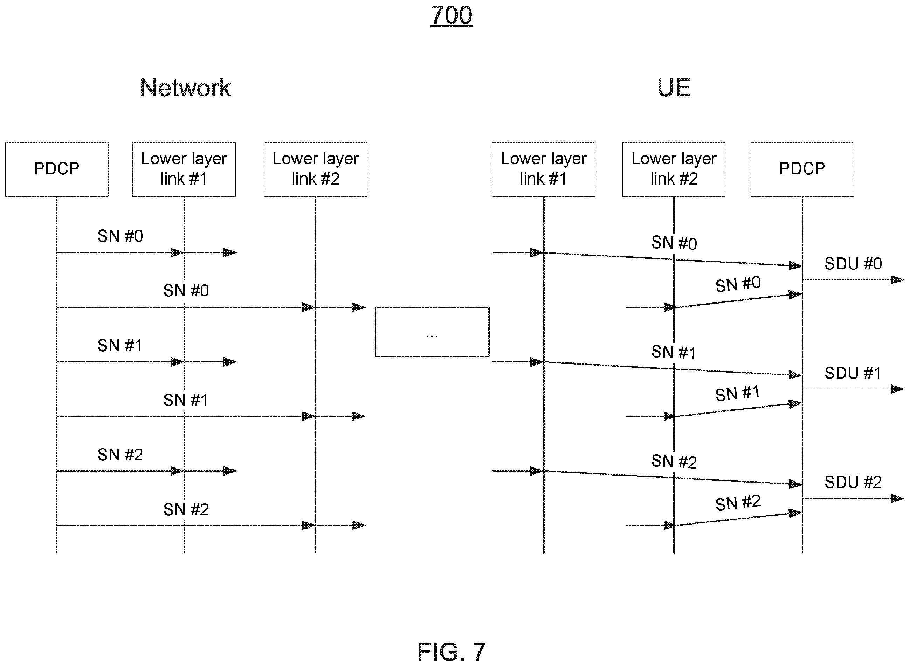

FIG. 7 illustrates an optimized scheduling strategy 700 using redundant scheduling on a first lower link and a second lower link. In one aspect, each of the PDUs can be transmitted on each one of a plurality of lower layer links, such as both the lower layer link #1 and lower layer link #2, if a high data rate is not essential and PDU packet loss is to be minimized. In the event that one or more of the PDUs having the same SN are received, the PDCP at the UE can discard one of the PDU. For example, the PDU which the PDCP in the UE has already received on other link can be discarded.

In another example, to ensure reliability, each one of the PDUs with sequence numbers (SN) such as, for example, SN#0, SN#1, SN #3, and SN #4 can be sent on a first lower layer link, such as lower layer link #1. In one aspect, each one the PDUs with sequence numbers (SN) such as, for example, SN#0, SN#1, SN #3, and SN #4 can also be sent on the second lower layer link, such as lower layer link #2. The PDCP at the UE can receive each one of the PDUs with sequence numbers (SN) such as, for example, SN#0, SN#1, SN #3, and SN #4. If, for example, the PDCP at the UE first receives SN#0, SN#1, SN #3, and SN #4 on lower layer link #1 and then subsequently receives SN#0, SN#1, SN #3, and SN #4 on lower layer link #2, the PDCP at the UE can select to discard SN#0, SN#1, SN #3, and SN #4 received on lower layer link #1. Alternatively, if the PDCP at the UE first receives SN#0, SN#1, SN #3, and SN #4 on lower layer link #2 and then subsequently receives SN#0, SN#1, SN #3, and SN #4 on lower layer link #1, the PDCP at the UE can select to discard SN#0, SN#1, SN #3, and SN #4 received on lower layer link #2. The PDCP of the UE can send one more service data units (SDUs), such as, for example, SDU #0, SDU #1, SDU #3, SDU #3, and/or SDU #4 to a next higher layer.

In one aspect, an optimized scheduling strategy using a timer based scheduling strategy can be used. In one aspect, similar to the optimized scheduling strategy using modulo operations, the timer based scheduling decision can be performed according to transmission time interval (TTI) rather than based on the SN of each PDU. For example, on each nth TTI, each one of the available PDUs can be sent on lower layer link #1; where "n" can be a non-zero value. During all other TTIs, one or more of the PDUs can be transmitted on lower layer link #2.

In one aspect, the optimized scheduling strategy can be indicated from the eNodeB to the UE. In one aspect, the optimized scheduling strategy can be indicated from the eNodeB to the UE by usage of a Control PDU. In aspect, the control PDUs can be defined as per 3GPP LTE PDCP specification Technical Specification (TS) 36.323 Rel. 12 (and/or other releases such as Rel. 8, 9, 10 Or 11), which are currently used only for PDCP Status Reports and RObust Header Compression (ROHC) feedback handling. In particular the 3GPP TS36.323 specification defines (i) a sequence number, (ii) a discard timer, and (iii) a reordering window for Packet Data Convergence Protocol (PDCP) in 3GPP LTE. In one aspect, one or more PDUs can contain user data and/or PDCP control data. However, an additional PDU type can be introduced to indicate the optimized scheduling strategy. In one aspect, the PDCP protocol can define one or more various PDU types, which can be used to specify a Control PDU type and also introduce a new PDU type for transmission of the optimized scheduling strategy scheme, as described below in Table 1.

**TABLE 1.**

| Bit | Description |
|---|---|
| 000 | PDCP status report |
| 001 | Interspersed ROHC feedback packet |
| 010 | Duallink scheduling scheme |
| 011-111 | reserved |

Since control PDUs can get lost over the air interface, the optimized scheduling strategy scheme can be acknowledged by the receiver by a control PDU with the same PDU type (without bitmap).

In one aspect, within the control PDU containing the bitmap, the sender (e.g., the eNodeB) can specify and define from which SN onwards the new or selected optimized scheduling strategy scheme is to be applied. An SN value can be chosen in order for the receiver (e.g., the UE) to have sufficient time to acknowledge the bitmap prior to the bitmap be used by the sender (e.g., the eNodeB). In one aspect, if the sender (e.g., the eNodeB) has not received the acknowledgement, the sender can resend the new or selected optimized scheduling strategy scheme to the receiver (e.g., the UE). If the receiver has not received any optimized scheduling strategy scheme, the UE can expect and be configured to receive the PDUs on any one of a plurality of lower layer links.

In one aspect, if a time based optimized scheduling strategy is used rather than an optimized scheduling strategy based on the sequence numbers, the sender can transmit a selected time period (e.g., a delta time). At the expiration of the selected time period, the optimized scheduling strategy can be used.

In one aspect, the transmission of the optimized scheduling strategy configuration can occur during a radio bearer (RB) configuration. In one aspect, a related RB can be established before data can be transferred on the EPS. With each RB configuration, one or more PDCP related parameters can be defined (like sequence number size, discard timer, header compression algorithm). Also, one or more additional fields can be introduced to indicate the selected, and applicable optimized scheduling strategy, along with the parameters of the optimized scheduling strategy. Accordingly, the constraint to use additional control PDUs can be reduced and/or eliminated altogether (e.g., there is no overhead during the data transmission phase). In the event a sender (e.g., the eNB) wants to change the type of optimized scheduling strategy that is being used, a re-establishment procedure with new PDCP parameters can be triggered by network.

In one aspect, the optimized scheduling strategy can be indicated from the sender to the receiver by combining both the usage of the Control PDU and the transmission of optimized scheduling strategy configuration during the RB configuration. For example, an initial indication of the optimized scheduling strategy that is used can be performed during the RB configuration. For each change to the type of optimized scheduling strategy that is to be used, the Control PDU can be used to provide the indication. By using both the Control PDU and transmission of the optimized scheduling strategy configuration during the RB configuration can avoid and/or eliminated additional reestablishment procedures which can cause a short interruption in data transmission.

In one aspect, the optimized scheduling strategy can be indicated by inline information within Data PDUs. For example, the optimized scheduling strategy can be added inside PDCP PDU header. Dependent on the configured SN size, any unused reserved bits that are available can be used to indicate an optimized scheduling strategy. Alternatively, an enhanced PDCU PDU header can be used to indicate the optimized scheduling strategy that is to be used.

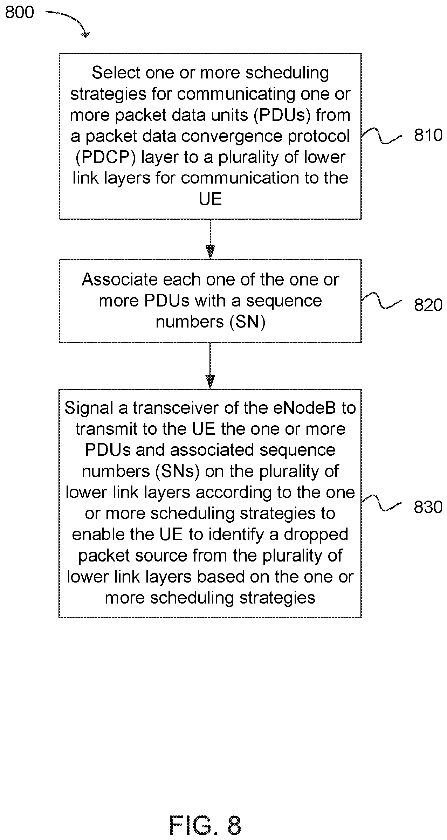

In one aspect, an example provides functionality 800 of an eNodeB operable to provide an optimized scheduling strategy with a user equipment (UE) using dual connectivity and/or long-term evolution (LTE) and wireless local area network (WLAN) Wireless local area network (WLAN) aggregation (LWA), as shown in the flow chart in FIG. 8. The functionality can be implemented as a method or the functionality can be executed as instructions on a machine, where the instructions are included one or more computer readable mediums or one or more transitory or non-transitory machine readable storage mediums. The eNodeB can comprise one or more processors and memory configured to: select one or more scheduling strategies for communicating one or more packet data units (PDUs) from a packet data convergence protocol (PDCP) layer to a plurality of lower link layers for communication to the UE, as in block 810. The eNodeB can comprise one or more processors and memory configured to: associate each one of the one or more PDUs with a sequence number (SN), as in block 820. The eNodeB can comprise one or more processors and memory configured to: signal a transceiver of the eNodeB to transmit to the UE the one or more PDUs and associated sequence numbers (SNs) on the plurality of lower link layers according to the one or more scheduling strategies to enable the UE to identify a dropped packet source from the plurality of lower link layers based on the one or more scheduling strategies, as in block 830.

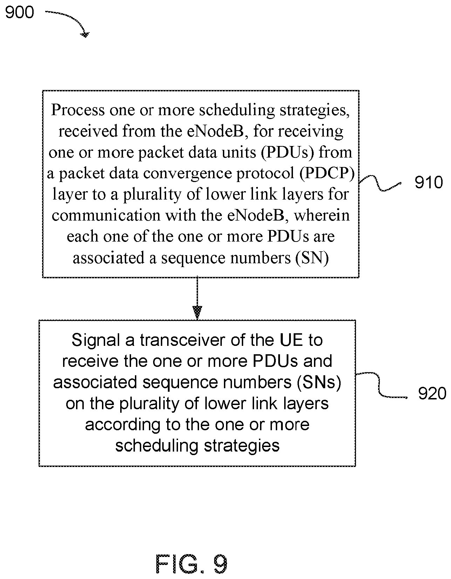

Another example provides functionality 900 of a user equipment (UE) operable to communication with an eNodeB, to use an optimized scheduling strategy with the eNodeB using dual connectivity and/or long-term evolution (LTE) and wireless local area network (WLAN) Wireless local area network (WLAN) aggregation (LWA), as shown in the flow chart in FIG. 9. The functionality can be implemented as a method or the functionality can be executed as instructions on a machine, where the instructions are included one or more computer readable mediums or one or more transitory or non-transitory machine readable storage mediums. The UE can comprise one or more processors and memory configured to: process one or more scheduling strategies, received from the eNodeB, for receiving one or more packet data units (PDUs) from a packet data convergence protocol (PDCP) layer to a plurality of lower link layers for communication with the eNodeB, wherein each one of the one or more PDUs are associated a sequence number (SN), as in block 910. The UE can comprise one or more processors and memory configured to: signal a transceiver of the UE to receive the one or more PDUs and associated sequence numbers (SNs) on the plurality of lower link layers according to the one or more scheduling strategies, as in block 920.

In one aspect, the functionality of 900 can include one or more of the following. In one aspect, the UE can identify one or more dropped packet source from the plurality of lower link layers based on the one or more scheduling strategies. The UE can, according to the one or more scheduling strategies: receive, from the PDCP of the eNodeB, the one or more PDUs having odd sequence numbers on a first one of the plurality of lower link layers; and/or receive, from the PDCP of the eNodeB, the one or more PDUs having even sequence numbers on a second one of the plurality of lower link layers. The UE can, according to the one or more scheduling strategies: transmit to the UE the one or more PDUs on a first one or a second one of the plurality of lower link layers having the SNs defined according to a modulo operation. The UE can, according to the one or more scheduling strategies: receive, from the PDCP of the eNodeB, the one or more PDUs on a first one of the plurality of lower link layers having the SNs that are a multiple of an N fixed number, wherein N is a positive integer; receive, from the PDCP of the eNodeB, the one or more PDUs on a second one of the plurality of lower link layers having the SNs that are a multiple of an M fixed number, wherein M is a positive integer; and/or receive, from the PDCP of the eNodeB, the one or more PDUs on a third one of the plurality of lower link layers having the SNs that are a multiple of an T fixed number, wherein T is a positive integer.

The UE can, according to the one or more scheduling strategies: receive, from the PDCP of the eNodeB, a scheduling bitmap for an X number of the one or more PDUs; receive, from the PDCP of the eNodeB, using the scheduling bitmap, the one or more PDUs on a first one of the plurality of lower link layers having an X bit, wherein X is a zero value or a positive integer; and/or receive, from the PDCP of the eNodeB, using the scheduling bitmap, the one or more PDUs on the a second one of the plurality of lower link layers having an X bit, wherein Y is a non-zero value or a positive integer. The UE can, according to the one or more scheduling strategies: receive, from the PDCP of the eNodeB, each of the one or more PDUs on a first one of the plurality of lower link layers and a second one of the plurality of lower link layers; and/or discard, via PDCP of the UE, the one or more packet data units (PDUs) having similar SNs.

The UE can, according to the one or more scheduling strategies: receive, from the PDCP of the eNodeB, the one or more PDUs on a first one or a second one of the plurality of lower link layers according to a time based scheduling.

The UE can, according to the one or more scheduling strategies: receive, from the PDCP of the eNodeB, an indication to use a selected one of the one or more scheduling strategies; receive, from the PDCP of the eNodeB, an indication to use an alternative one of the one or more scheduling strategies according using a control PDU; receive, from the PDCP of the eNodeB, an indication to use an alternative one of the one or more scheduling strategies according to the one of the alternative one of the one or more scheduling strategies added to a PDCP PDU header; receive, from the PDCP of the eNodeB, an indication to use an alternative one of the one or more scheduling strategies according to the one of the alternative one of the one or more scheduling strategies added to an enhanced PDCP PDU header; and/or receive, from the PDCP of the eNodeB, an indication to use an alternative one of the one or more scheduling strategies by defining one or more PDCP parameters associated with a resource block configuration.

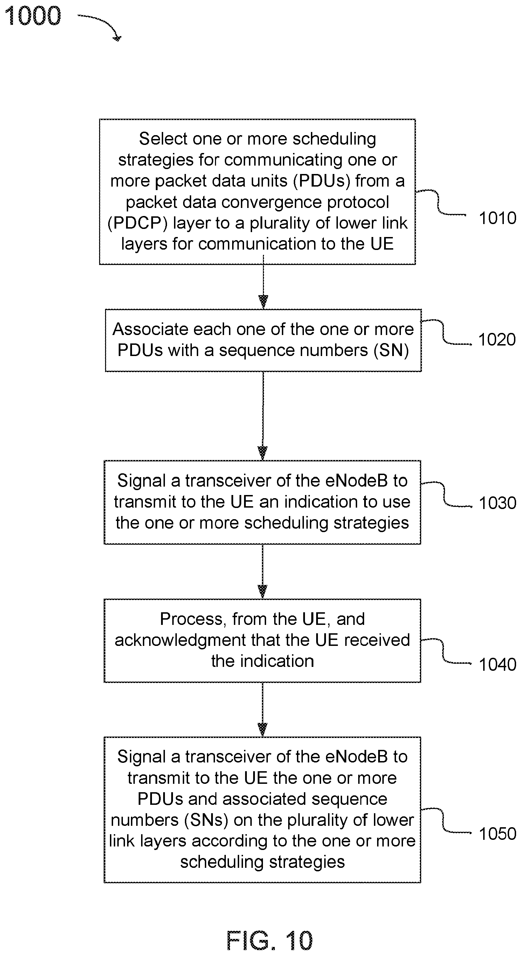

Another example provides functionality 1000 of an eNodeB operable to provide an optimized scheduling strategy with a user equipment (UE) using dual connectivity and/or long-term evolution (LTE) and wireless local area network (WLAN) Wireless local area network (WLAN) aggregation (LWA), as shown in the flow chart in FIG. 10. The functionality can be implemented as a method or the functionality can be executed as instructions on a machine, where the instructions are included one or more computer readable mediums or one or more transitory or non-transitory machine readable storage mediums. The eNodeB can comprise one or more processors and memory configured to: select one or more scheduling strategies for communicating one or more packet data units (PDUs) from a packet data convergence protocol (PDCP) layer to a plurality of lower link layers for communication to the UE, as in block 1010. The eNodeB can comprise one or more processors and memory configured to: associate each one of the one or more PDUs with a sequence number (SN), as in block 1020. The eNodeB can comprise one or more processors and memory configured to: signal a transceiver of the eNodeB to transmit to the UE an indication to use the one or more scheduling strategies, as in block 1030. The eNodeB can comprise one or more processors and memory configured to: process, from the UE, and acknowledgment that the UE received the indication, as in block 1040. The eNodeB can comprise one or more processors and memory configured to: signal a transceiver of the eNodeB to transmit to the UE the one or more PDUs and associated sequence numbers (SNs) on the plurality of lower link layers according to the one or more scheduling strategies, as in block 1050.

In one aspect, the functionality of 800 and/or 1000 can include one or more of the following. In one aspect, the eNodeB can transmit to the UE the one or more PDUs having odd sequence numbers on a first one of the plurality of lower link layers; and/or transmit to the UE the one or more PDUs having even sequence numbers on a second one of the plurality of lower link layers. In one aspect, the eNodeB can, according to the one or more scheduling strategies, transmit to the UE the one or more PDUs on a first one or a second one of the plurality of lower link layers having the SNs defined according to a modulo operation. The eNodeB can, according to the one or more scheduling strategies: transmit to the UE the one or more PDUs on a first one of the plurality of lower link layers having the SNs that are a multiple of an N fixed number, wherein N is a positive integer; transmit to the UE the one or more PDUs on a second one of the plurality of lower link layers having the SNs that are a multiple of an M fixed number, wherein M is a positive integer; or transmit to the UE the one or more PDUs on a third one of the plurality of lower link layers having the SNs that are a multiple of an T fixed number, wherein T is a positive integer.

In one aspect, the eNodeB can, according to the one or more scheduling strategies, define a scheduling bitmap for an X number of the one or more PDUs; transmit to the UE, using the scheduling bitmap, the one or more PDUs on a first one of the plurality of lower link layers having an X bit, wherein X is a zero value or a positive integer; and/or transmit to the UE, using the scheduling bitmap, the one or more PDUs on the a second one of the plurality of lower link layers having an X bit, wherein Y is a non zero value or a positive integer.

In one aspect, the eNodeB can, according to the one or more scheduling strategies, transmit to the UE each of the one or more PDUs on a first one of the plurality of lower link layers and a second one of the plurality of lower link layers, wherein the one or more packet data units (PDUs) having similar SNs are discarded by the UE. In one aspect, the eNodeB can, according to the one or more scheduling strategies, transmit to the UE the one or more PDUs on a first one or a second one of the plurality of lower link layers according to a time based scheduling. The eNodeB can indicate to the UE a selected one of the one or more scheduling strategies, indicate to the UE a change in one of the one or more scheduling strategies according using a control PDU, indicate to the UE the one of the one or more scheduling strategies according by adding the one of the one or more scheduling strategies to a PDCP PDU header, indicate to the UE the one of the one or more scheduling strategies by adding the one of the one or more scheduling strategies to an enhanced PDCP PDU header, and/or indicate to the UE the one of the one or more scheduling strategies by defining one or more PDCP parameters associated with a resource block configuration.

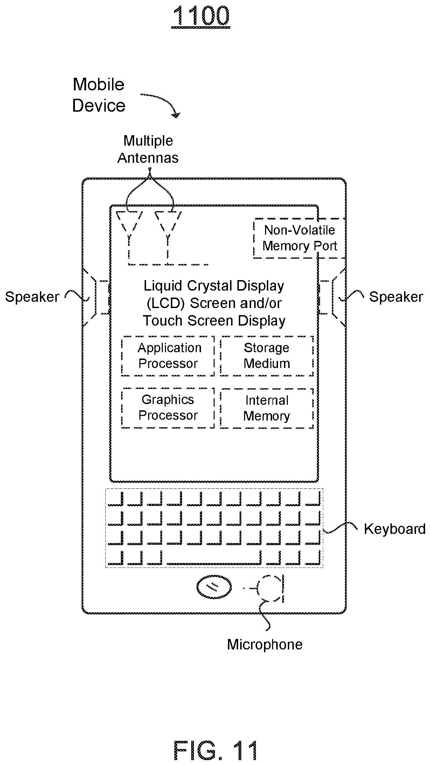

FIG. 11 illustrates a diagram of a wireless device (e.g., UE) in accordance with an example. FIG. 11 provides an example illustration of the wireless device, such as a user equipment (UE) UE, a mobile station (MS), a mobile wireless device, a mobile communication device, a tablet, a handset, or other type of wireless device. In one aspect, the wireless device can include at least one of an antenna, a touch sensitive display screen, a speaker, a microphone, a graphics processor, a baseband processor, an application processor, internal memory, a non-volatile memory port, and combinations thereof.

The wireless device can include one or more antennas configured to communicate with a node or transmission station, such as a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The wireless device can be configured to communicate using at least one wireless communication standard including 3GPP LTE, WiMAX, High Speed Packet Access (HSPA), Bluetooth, and Wi-Fi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The mobile device can include a storage medium. In one aspect, the storage medium can be associated with and/or communicate with the application processor, the graphics processor, the display, the non-volatile memory port, and/or internal memory. In one aspect, the application processor and graphics processor are storage mediums.

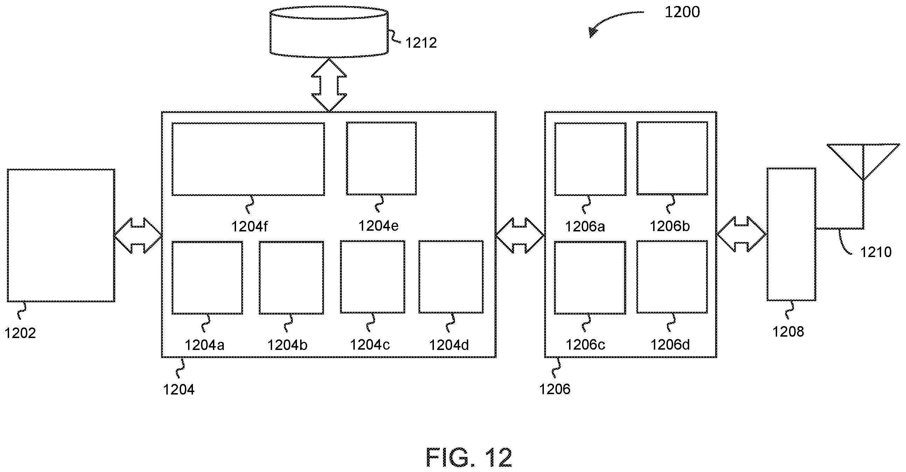

FIG. 12 illustrates a diagram of example components of a User Equipment (UE) device in accordance with an example. Fig. 12 illustrates, in one aspect, for example, components of a User Equipment (UE) device 1200. In some aspects, the UE device 1200 can include application circuitry 1202, baseband circuitry 1204, Radio Frequency (RF) circuitry 1206, front-end module (FEM) circuitry 1208 and one or more antennas 1210, coupled together at least as shown.

The application circuitry 1202 can include one or more application processors. For example, the application circuitry 1202 can include circuitry such as, but not limited to, one or more single-core or multi-core processors. The processor(s) can include any combination of general-purpose processors and dedicated processors (e.g., graphics processors, application processors, etc.). The processors can be coupled with and/or can include memory/storage and can be configured to execute instructions stored in the memory/storage to enable various applications and/or operating systems to run on the system.

The processor(s) can include any combination of general-purpose processors and dedicated processors (e.g., graphics processors, application processors, etc.). The processors can be coupled with and/or can include a storage medium 1212, and can be configured to execute instructions stored in the storage medium 1212 to enable various applications and/or operating systems to run on the system.

The baseband circuitry 1204 can include circuitry such as, but not limited to, one or more single-core or multi-core processors. The baseband circuitry 1204 can include one or more baseband processors and/or control logic to process baseband signals received from a receive signal path of the RF circuitry 1206 and to generate baseband signals for a transmit signal path of the RF circuitry 1206. Baseband processing circuitry 1204 can interface with the application circuitry 1202 for generation and processing of the baseband signals and for controlling operations of the RF circuitry 1206. For example, in some aspects, the baseband circuitry 1204 can include a second generation (2G) baseband processor 1204a, third generation (3G) baseband processor 1204b, fourth generation (4G) baseband processor 1204c, and/or other baseband processor(s) 1204d for other existing generations, generations in development or to be developed in the future (e.g., fifth generation (5G), 6G, etc.). The baseband circuitry 1204 (e.g., one or more of baseband processors 1204a-d) can handle various radio control functions that enable communication with one or more radio networks via the RF circuitry 1206. The radio control functions can include, but are not limited to, signal modulation/demodulation, encoding/decoding, radio frequency shifting, etc. In some aspects, modulation/demodulation circuitry of the baseband circuitry 1204 can include Fast-Fourier Transform (FFT), precoding, and/or constellation mapping/demapping functionality. In some aspects, encoding/decoding circuitry of the baseband circuitry 1204 can include convolution, tail-biting convolution, turbo, Viterbi, and/or Low Density Parity Check (LDPC) encoder/decoder functionality. Aspects of modulation/demodulation and encoder/decoder functionality are not limited to these examples and can include other suitable functionality in other aspects.

In some aspects, the baseband circuitry 1204 can include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1204e of the baseband circuitry 1204 can be configured to run elements of the protocol stack for signaling of the PHY, MAC, RLC, PDCP and/or RRC layers. In some aspects, the baseband circuitry can include one or more audio digital signal processor(s) (DSP) 1204f. The audio DSP(s) 1204f can be include elements for compression/decompression and echo cancellation and can include other suitable processing elements in other aspects. Components of the baseband circuitry can be suitably combined in a single chip, a single chipset, or disposed on a same circuit board in some aspects. In some aspects, some or all of the constituent components of the baseband circuitry 1204 and the application circuitry 1202 can be implemented together such as, for example, on a system on a chip (SOC).

In some aspects, the baseband circuitry 1204 can provide for communication compatible with one or more radio technologies. For example, in some aspects, the baseband circuitry 1204 can support communication with an evolved universal terrestrial radio access network (EUTRAN) and/or other wireless metropolitan area networks (WMAN), a wireless local area network (WLAN), a wireless personal area network (WPAN). Aspects in which the baseband circuitry 1204 is configured to support radio communications of more than one wireless protocol can be referred to as multimode baseband circuitry.

RF circuitry 1206 can enable communication with wireless networks using modulated electromagnetic radiation through a non-solid medium. In various aspects, the RF circuitry 1206 can include switches, filters, amplifiers, etc. to facilitate the communication with the wireless network. RF circuitry 1206 can include a receive signal path which can include circuitry to down-convert RF signals received from the FEM circuitry 1208 and provide baseband signals to the baseband circuitry 1204. RF circuitry 1206 can also include a transmit signal path which can include circuitry to up-convert baseband signals provided by the baseband circuitry 1204 and provide RF output signals to the FEM circuitry 1208 for transmission.

In some aspects, the RF circuitry 1206 can include a receive signal path and a transmit signal path. The receive signal path of the RF circuitry 1206 can include mixer circuitry 1206a, amplifier circuitry 1206b and filter circuitry 1206c. The transmit signal path of the RF circuitry 1206 can include filter circuitry 1206c and mixer circuitry 1206a. RF circuitry 1206 can also include synthesizer circuitry 1206d for synthesizing a frequency for use by the mixer circuitry 1206a of the receive signal path and the transmit signal path. In some aspects, the mixer circuitry 1206a of the receive signal path can be configured to down-convert RF signals received from the FEM circuitry 1208 based on the synthesized frequency provided by synthesizer circuitry 1206d. The amplifier circuitry 1206b can be configured to amplify the down-converted signals and the filter circuitry 1206c can be a low-pass filter (LPF) or band-pass filter (BPF) configured to remove unwanted signals from the down-converted signals to generate output baseband signals. Output baseband signals can be provided to the baseband circuitry 1204 for further processing. In some aspects, the output baseband signals can be zero-frequency baseband signals, although the output baseband signals do not have to be zero-frequency baseband signals. In some aspects, mixer circuitry 1206a of the receive signal path can comprise passive mixers, although the scope of the aspects is not limited in this respect.

In some aspects, the mixer circuitry 1206a of the transmit signal path can be configured to up-convert input baseband signals based on the synthesized frequency provided by the synthesizer circuitry 1206d to generate RF output signals for the FEM circuitry 1208. The baseband signals can be provided by the baseband circuitry 1204 and can be filtered by filter circuitry 1206c. The filter circuitry 1206c can include a low-pass filter (LPF), although the scope of the aspects is not limited in this respect.

In some aspects, the mixer circuitry 1206a of the receive signal path and the mixer circuitry 1206a of the transmit signal path can include two or more mixers and can be arranged for quadrature downconversion and/or upconversion respectively. In some aspects, the mixer circuitry 1206a of the receive signal path and the mixer circuitry 1206a of the transmit signal path can include two or more mixers and can be arranged for image rejection (e.g., Hartley image rejection). In some aspects, the mixer circuitry 1206a of the receive signal path and the mixer circuitry 1206a can be arranged for direct downconversion and/or direct upconversion, respectively. In some aspects, the mixer circuitry 1206a of the receive signal path and the mixer circuitry 1206a of the transmit signal path can be configured for super-heterodyne operation.

In some aspects, the output baseband signals and the input baseband signals can be analog baseband signals, although the scope of the aspects is not limited in this respect. In some alternate aspects, the output baseband signals and the input baseband signals can be digital baseband signals. In these alternate aspects, the RF circuitry 1206 can include analog-to-digital converter (ADC) and digital-to-analog converter (DAC) circuitry and the baseband circuitry 1204 can include a digital baseband interface to communicate with the RF circuitry 1206.

In some dual-mode embodiments, a separate radio IC circuitry can be provided for processing signals for each spectrum, although the scope of the embodiments is not limited in this respect.

In some embodiments, the synthesizer circuitry 1206d can be a fractional-N synthesizer or a fractional N/N+1 synthesizer, although the scope of the embodiments is not limited in this respect as other types of frequency synthesizers can be suitable. For example, synthesizer circuitry 1206d can be a delta-sigma synthesizer, a frequency multiplier, or a synthesizer comprising a phase-locked loop with a frequency divider.

The synthesizer circuitry 1206d can be configured to synthesize an output frequency for use by the mixer circuitry 1206a of the RF circuitry 1206 based on a frequency input and a divider control input. In some embodiments, the synthesizer circuitry 1206d can be a fractional N/N+1 synthesizer.

In some embodiments, frequency input can be provided by a voltage controlled oscillator (VCO), although that is not a constraint. Divider control input can be provided by either the baseband circuitry 1204 or the applications processor 1202 depending on the desired output frequency. In some embodiments, a divider control input (e.g., N) can be determined from a look-up table based on a channel indicated by the applications processor 1202.

Synthesizer circuitry 1206d of the RF circuitry 1206 can include a divider, a delay-locked loop (DLL), a multiplexer and a phase accumulator. In some embodiments, the divider can be a dual modulus divider (DMD) and the phase accumulator can be a digital phase accumulator (DPA). In some embodiments, the DMD can be configured to divide the input signal by either N or N+1 (e.g., based on a carry out) to provide a fractional division ratio. In some example embodiments, the DLL can include a set of cascaded, tunable, delay elements, a phase detector, a charge pump and a D-type flip-flop. In these embodiments, the delay elements can be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1206d can be configured to generate a carrier frequency as the output frequency, while in other embodiments, the output frequency can be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency can be a LO frequency (fLO). In some embodiments, the RF circuitry 1206 can include an IQ/polar converter.

FEM circuitry 1208 can include a receive signal path which can include circuitry configured to operate on RF signals received from one or more antennas 1210, amplify the received signals and provide the amplified versions of the received signals to the RF circuitry 1206 for further processing. FEM circuitry 1208 can also include a transmit signal path which can include circuitry configured to amplify signals for transmission provided by the RF circuitry 1206 for transmission by one or more of the one or more antennas 1210.

In some embodiments, the FEM circuitry 1208 can include a TX/RX switch to switch between transmit mode and receive mode operation. The FEM circuitry can include a receive signal path and a transmit signal path. The receive signal path of the FEM circuitry can include a low-noise amplifier (LNA) to amplify received RF signals and provide the amplified received RF signals as an output (e.g., to the RF circuitry 1206). The transmit signal path of the FEM circuitry 1208 can include a power amplifier (PA) to amplify input RF signals (e.g., provided by RF circuitry 1206), and one or more filters to generate RF signals for subsequent transmission (e.g., by one or more of the one or more antennas 1210.

In some embodiments, the UE device 1200 can include additional elements such as, for example, memory/storage, display, camera, sensor, and/or input/output (I/O) interface.

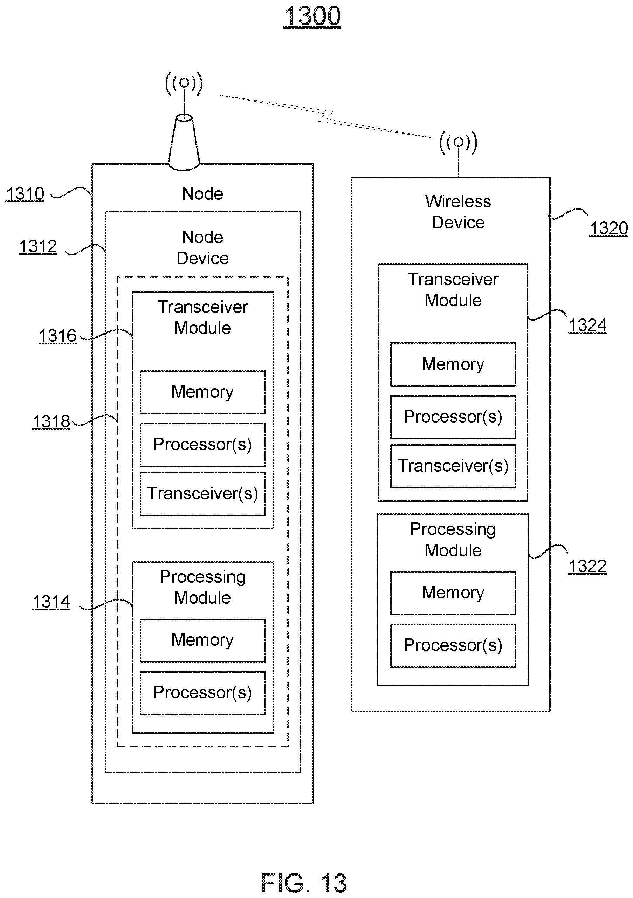

FIG. 13 illustrates a diagram 1300 of a node 1310 (e.g., eNB and/or a base station) and wireless device (e.g., UE) in accordance with an example. The node can include a base station (BS), a Node B (NB), an evolved Node B (eNB), a baseband unit (BBU), a remote radio head (RRH), a remote radio equipment (RRE), a remote radio unit (RRU), or a central processing module (CPM). In one aspect, the node can be a Serving GPRS Support Node. The node 1310 can include a node device 1312. The node device 1312 or the node 1310 can be configured to communicate with the wireless device 1320. The node device 1312 can be configured to implement the technology described. The node device 1312 can include a processing module 1314 and a transceiver module 1316. In one aspect, the node device 1312 can include the transceiver module 1316 and the processing module 1314 forming a circuitry 1318 for the node 1310. In one aspect, the transceiver module 1316 and the processing module 1314 can form a circuitry of the node device 1312. The processing module 1314 can include one or more processors and memory. In one embodiment, the processing module 1322 can include one or more application processors. The transceiver module 1316 can include a transceiver and one or more processors and memory. In one embodiment, the transceiver module 1316 can include a baseband processor.

The wireless device 1320 can include a transceiver module 1324 and a processing module 1322. The processing module 1322 can include one or more processors and
memory. In one embodiment, the processing module 1322 can include one or more application processors. The transceiver module 1324 can include a transceiver and one or more processors and memory. In one embodiment, the transceiver module 1324 can include a baseband processor. The wireless device 1320 can be configured to implement the technology described. The node 1310 and the wireless devices 1320 can also include one or more storage mediums, such as the transceiver module 1316, 1324 and/or the processing module 1314, 1322. In one aspect, the components described herein of the transceiver module 1316 can be included in one or more separate devices that may used in a cloud-RAN (C-RAN) environment.

As used herein, the term "circuitry" can refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some aspects, the circuitry can be implemented in, or functions associated with the circuitry can be implemented by, one or more software or firmware modules. In some aspects, circuitry can include logic, at least partially operable in hardware.

Various techniques, or certain aspects or portions thereof, may take the form of program code (i.e., instructions) embodied in tangible media, such as floppy diskettes, compact disc-read-only memory (CD-ROMs), hard drives, transitory or non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution an programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). One or more programs that may implement or utilize the various techniques described herein may use an application programming interface (API), reusable controls, and the like. Such programs maybe implemented in a high level procedural or object oriented programming language to communicate with a computer system. However, the program(s) may be implemented in assembly or machine language, if desired. In any case, the language may be a compiled or interpreted language, and combined with hardware implementations. [00175] As used herein, the term processor can include general purpose processors, specialized processors such as VLSI, FPGAs, or other types of specialized processors, as well as base band processors used in transceivers to send, receive, and process wireless communications.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials maybe presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics maybe combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

## Claims

1. An apparatus of an eNodeB (112; 212), the eNodeB configured to communicate with a User Equipment ,UE (110), the apparatus comprising one or more processors and memory configured to:
select (810) one or more scheduling strategies for communicating one or more packet data units ,PDUs, from a packet data convergence protocol ,PDCP, layer to a plurality of lower link layers for communication to the UE, wherein the one or more scheduling strategies are one or more predictable scheduling strategies;
associate (820) each one of the one or more PDUs with a sequence number ,SN; and
signal (830) a transceiver of the eNodeB to transmit to the UE the one or more PDUs and associated sequence numbers ,SNs, on the plurality of lower link layers according to the one or more scheduling strategies, wherein a predictable scheduling strategy is for enabling the UE to identify a dropped PDU source among the plurality of lower link layers based on the one or more predictable scheduling strategies.

2. The apparatus of claim 1, wherein the one or more processors and memory are further configured to, according to the one or more scheduling strategies:
signal a transceiver of the eNodeB to transmit to the UE the one or more PDUs having odd sequence numbers on a first one of the plurality of lower link layers;
signal a transceiver of the eNodeB to transmit to the UE the one or more PDUs having even sequence numbers on a second one of the plurality of lower link layers;
signal a transceiver of the eNodeB to transmit to the UE the one or more PDUs on a first one or a second one of the plurality of lower link layers having the SNs defined according to a modulo operation;
signal a transceiver of the eNodeB to transmit to the UE the one or more PDUs on a first one of the plurality of lower link layers having the SNs that are a multiple of an N fixed number, wherein N is a positive integer;
signal a transceiver of the eNodeB to transmit to the UE the one or more PDUs on a second one of the plurality of lower link layers having the SNs that are a multiple of an M fixed number, wherein M is a positive integer; or
signal a transceiver of the eNodeB to transmit to the UE the one or more PDUs on a third one of the plurality of lower link layers having the SNs that are a multiple of an T fixed number, wherein T is a positive integer.

3. The apparatus of claim 1 or 2, wherein the one or more processors and memory are further configured to, according to the one or more scheduling strategies:
define a scheduling bitmap for an X number of the one or more PDUs;
signal a transceiver of the eNodeB to transmit to the UE, using the scheduling bitmap, the one or more PDUs on a first one of the plurality of lower link layers having an X bit, wherein X is a zero value or a positive integer;
signal a transceiver of the eNodeB to transmit to the UE, using the scheduling bitmap, the one or more PDUs on the a second one of the plurality of lower link layers having an X bit, wherein Y is a non zero value or a positive integer;
signal a transceiver of the eNodeB to transmit to the UE each of the one or more PDUs on a first one of the plurality of lower link layers and a second one of the plurality of lower link layers, wherein the one or more packet data units ,PDUs, having similar SNs are discarded by the UE; or
signal a transceiver of the eNodeB to transmit to the UE the one or more PDUs on a first one or a second one of the plurality of lower link layers according to a time based scheduling.

4. The apparatus of any one of claim 1-3, wherein the one or more processors and memory are further configured to:
provide data, comprising an indication to indicate to the UE a selected one of the one or more scheduling strategies;
provide data, comprising an indication to indicate to the UE a change in one of the one or more scheduling strategies according using a control PDU;
provide data, comprising an indication to indicate to the UE the one of the one or more scheduling strategies according by adding the one of the one or more scheduling strategies to a PDCP PDU header;
provide data, comprising an indication to indicate to the UE the one of the one or more scheduling strategies by adding the one of the one or more scheduling strategies to an enhanced PDCP PDU header; or
provide data, comprising an indication to indicate to the UE the one of the one or more scheduling strategies by defining one or more PDCP parameters associated with a resource block configuration.

5. An apparatus of a user equipment ,UE (110), the UE configured to use an optimized scheduling strategy using long-term evolution ,LTE, and wireless local area network ,WLAN, aggregation ,LWA, with an eNodeB (112; 212), the apparatus comprising one or more processors and memory configured to:
Process (910) one or more scheduling strategies, received from the eNodeB, for receiving one or more packet data units ,PDUs, transmitted by the eNB from a packet data convergence
protocol ,PDCP, layer to a plurality of lower link layers for communication with the eNodeB, wherein each one of the one or more PDUs are associated a sequence number ,SN, wherein the one or more scheduling strategies are one or more predictable scheduling strategies; and
signal (920) a transceiver of the UE to receive the one or more PDUs and associated sequence numbers ,SNs, on the plurality of lower link layers according to the one or more predictable scheduling strategies, wherein the one or more processors and memory are further configured to: identify one or more dropped PDU source among the plurality of lower link layers based on the one or more scheduling strategies.

6. The apparatus of claim 5 wherein the one or more processors and memory are further configured to, according to the one or more scheduling strategies:
signal a transceiver of the UE to receive, from the PDCP of the eNodeB, the one or more PDUs having odd sequence numbers on a first one of the plurality of lower link layers;
decode, from the PDCP of the eNodeB, the one or more PDUs having even sequence numbers on a second one of the plurality of lower link layers;
decode the one or more PDUs on a first one or a second one of the plurality of lower link layers having the SNs defined according to a modulo operation;
signal a transceiver of the UE to receive, from the PDCP of the eNodeB, the one or more PDUs on a first one of the plurality of lower link layers having the SNs that are a multiple of an N fixed number, wherein N is a positive integer;
signal a transceiver of the UE to receive, from the PDCP of the eNodeB, the one or more PDUs on a second one of the plurality of lower link layers having the SNs that are a multiple of an M fixed number, wherein M is a positive integer;
signal a transceiver of the UE to receive, from the PDCP of the eNodeB, the one or more PDUs on a third one of the plurality of lower link layers having the SNs that are a multiple of an T fixed number, wherein T is a positive integer;
signal a transceiver of the UE to receive, from the PDCP of the eNodeB, a scheduling bitmap for an X number of the one or more PDUs;
signal a transceiver of the UE to receive, from the PDCP of the eNodeB, using the scheduling bitmap, the one or more PDUs on a first one of the plurality of lower link layers having an X bit, wherein X is a zero value or a positive integer;
signal a transceiver of the UE to receive, from the PDCP of the eNodeB, using the scheduling bitmap, the one or more PDUs on the a second one of the plurality of lower link layers having an X bit, wherein Y is a non zero value or a positive integer;
decode, from the PDCP of the eNodeB, each of the one or more PDUs on a first one of the plurality of lower link layers and a second one of the plurality of lower link layers;
or discard, via PDCP of the UE, the one or more packet data units ,PDUs, having similar SNs.

7. The apparatus of any one of claim 5-6, wherein the one or more processors and memory are further configured to, according to the one or more scheduling strategies, receive, from the PDCP of the eNodeB, the one or more PDUs on a first one or a second one of the plurality of lower link layers according to a time based scheduling.

8. The apparatus of any one of claim 5-7, wherein the one or more processors and memory are further configured to:
signal a transceiver of the UE to receive, from the PDCP of the eNodeB, an indication to use a selected one of the one or more scheduling strategies;
signal a transceiver of the UE to receive, from the PDCP of the eNodeB, an indication to use an alternative one of the one or more scheduling strategies according using a control PDU;
signal a transceiver of the UE to receive, from the PDCP of the eNodeB, an indication to use an alternative one of the one or more scheduling strategies according to the one of the alternative one of the one or more scheduling strategies added to a PDCCPPDCP PDU header;
signal a transceiver of the UE to receive, from the PDCP of the eNodeB, an indication to use an alternative one of the one or more scheduling strategies according to the one of the alternative one of the one or more scheduling strategies added to an enhanced PDCP PDU header; or
signal a transceiver of the UE to receive, from the PDCP of the eNodeB, an indication to use an alternative one of the one or more scheduling strategies by defining one or more PDCP parameters associated with a resource block configuration, wherein the apparatus includes at least one of an antenna, a touch sensitive display screen, a speaker, a microphone, a graphics processor, a baseband processor, an application processor, internal memory, a non-volatile memory port, and combinations thereof.

9. The apparatus of any one of claims 1 to 8 configured to:
signal (1030) a transceiver of the eNodeB to transmit to the UE an indication to use the one or more scheduling strategies;
process (1040), from the UE, an acknowledgment that the UE received the indication.

## Patentansprüche

1. Vorrichtung eines eNodeB (112; 212), wobei der eNodeB konfiguriert ist, um mit einem Benutzergerät, UE (110), zu kommunizieren, wobei die Vorrichtung einen oder mehrere Prozessoren und Speicher umfasst, die konfiguriert sind, zum:
Auswählen (810) einer oder mehrerer Planungsstrategien zum Kommunizieren einer oder mehrerer Paketdateneinheiten, PDUs, von einer Paketdatenkonvergenzprotokoll-, PDCP, Schicht an eine Vielzahl von unteren Verbindungsschichten zur Kommunikation mit dem UE (810), wobei die eine oder mehreren Planungsstrategien eine oder mehrere vorhersagbare Planungsstrategien sind;
Assoziieren (810) jeder der einen oder mehreren PDUs mit einer Sequenznummer, SN; und
Signalisieren (830) an einen Transceiver des eNodeB, um die eine oder mehreren PDUs und assoziierte Sequenznummern, SNs, auf der Vielzahl von unteren Verbindungsschichten gemäß der ein oder mehreren Planungsstrategien an das UE zu übertragen, wobei eine vorhersagbare Planungsstrategie dazu dient, das UE zu befähigen, eine PDU-Quelle unter der Vielzahl von unteren Verbindungsschichten basierend auf der einen oder mehreren vorhersagbaren Planungsstrategien zu identifizieren.

2. Vorrichtung nach Anspruch 1, wobei die eine oder mehreren Prozessoren und Speicher ferner konfiguriert sind, gemäß der einen oder den mehreren Planungsstrategien zum:
Signalisieren an einen Transceiver des eNodeB, um die eine oder mehreren PDUs, die ungerade Sequenznummern auf einer ersten der Vielzahl von unteren Verbindungsschichten aufweisen, an das UE zu übertragen;
Signalisieren an einen Transceiver des eNodeB, um die eine oder mehreren PDUs, die gerade Sequenznummern auf einer zweiten der Vielzahl von unteren Verbindungsschichten aufweisen, an das UE zu übertragen;
Signalisieren an einen Transceiver des eNodeB, um die eine oder mehreren PDUs auf einer ersten oder einer zweiten der Vielzahl von unteren Verbindungsschichten, die die gemäß einer Modulo-Operation definierten SNs aufweisen, an das UE zu übertragen;
Signalisieren an einen Transceiver des eNodeB, um die eine oder mehreren PDUs auf einer ersten der Vielzahl von unteren Verbindungsschichten, die die SNs aufweisen, die ein Vielfaches einer N festen Zahl sind, an das UE zu übertragen, wobei N eine positive ganze Zahl ist;
Signalisieren an einen Transceiver des eNodeB, um die eine oder mehreren PDUs auf einer zweiten der Vielzahl von unteren Verbindungsschichten, die die SNs aufweisen, die ein Vielfaches einer M festen Zahl sind, an das UE zu übertragen, wobei M eine positive ganze Zahl ist; oder
Signalisieren an einen Transceiver des eNodeB, um die eine oder mehreren PDUs auf einer dritten der Vielzahl von unteren Verbindungsschichten, die die SNs aufweisen, die ein Vielfaches einer T festen Zahl sind, an das UE zu übertragen, wobei T eine positive ganze Zahl ist.

3. Vorrichtung nach Anspruch 1 oder 2, wobei die eine oder mehreren Prozessoren und Speicher ferner konfiguriert sind, gemäß der einen oder den mehreren Planungsstrategien zum:
Definieren einer Planungs-Bitmap für eine X-Zahl der einen oder mehreren PDUs;
Signalisieren an einen Transceiver des eNodeB, um unter Verwendung der Planungs-Bitmap die eine oder mehreren PDUs auf einer ersten der Vielzahl von unteren Verbindungsschichten, die ein X-Bit aufweisen, an das UE zu übertragen, wobei X ein Nullwert oder eine positive ganze Zahl ist;
Signalisieren an einen Transceiver des eNodeB, um unter Verwendung der Planungs-Bitmap die eine oder mehreren PDUs auf der einen zweiten der Vielzahl von unteren Verbindungsschichten, die ein X-Bit aufweisen, an das UE zu übertragen, wobei Y ein Nicht-Nullwert oder eine positive ganze Zahl ist;
Signalisieren an einen Transceiver des eNodeB, um jede der einen oder mehreren PDUs auf einer ersten der Vielzahl von unteren Verbindungsschichten und einer zweiten der Vielzahl von unteren Verbindungsschichten an das UE zu übertragen, wobei die eine oder mehreren Paketdateneinheiten, PDUs, die ähnliche SNs aufweisen, durch das UE verworfen werden; oder
Signalisieren an einen Transceiver des eNodeB, um die eine oder mehreren PDUs auf einer ersten oder einer zweiten der Vielzahl von unteren Verbindungsschichten gemäß einer zeitbasierten Planung an das UE zu übertragen.

4. Vorrichtung nach einem der Ansprüche 1-3, wobei der eine oder mehreren Prozessoren und Speicher ferner konfiguriert sind, zum:
Bereitstellen von Daten, umfassend eine Anzeige, um dem UE eine ausgewählte der einen oder mehreren Planungsstrategien anzuzeigen;
Bereitstellen von Daten, umfassend eine Anzeige, um dem UE eine Änderung in einer der einen oder mehreren Planungsstrategien unter Verwendung einer Steuer-PDU anzuzeigen;
Bereitstellen von Daten, umfassend eine Anzeige, um dem UE die eine der einen oder mehreren Planungsstrategien anzuzeigen, gemäß dem Hinzufügen der einen der einen oder mehreren Planungsstrategien zu einem PDCP-PDU-Header;
Bereitstellen von Daten, umfassend eine Anzeige, um dem UE die eine der einen oder mehreren Planungsstrategien anzuzeigen, durch Hinzufügen der einen der einen oder mehreren Planungsstrategien zu einem erweiterten PDCP-PDU-Header; oder Bereitstellen von Daten, umfassend eine Anzeige, um dem UE die eine der einen oder mehreren Planungsstrategien anzuzeigen, durch Definieren eines oder mehrerer PDCP-Parameter, die mit einer Ressourcenblockkonfiguration assoziiert sind.

5. Vorrichtung eines Benutzergeräts, UE (110), wobei das UE konfiguriert ist, um eine optimierte Planungsstrategie unter Verwendung von Long-Term Evolution, LTE, und Wireless Local Area Network, WLAN, Aggregation, LWA, mit einem eNodeB (112; 212) zu verwenden, wobei die Vorrichtung einen oder mehrere Prozessoren und Speicher umfasst, die konfiguriert sind, zum:
Verarbeiten (910) einer oder mehrerer Planungsstrategien, die vom eNodeB empfangen werden, zum Empfangen einer oder mehrerer Paketdateneinheiten, PDUs, die vom eNB von einer Paketdatenkonvergenzprotokoll-, PDCP, Schicht an eine Vielzahl von unteren Verbindungsschichten zur Kommunikation mit dem eNodeB übertragen werden, wobei jede der einen oder mehreren PDUs mit einer Sequenznummer, SN, assoziiert ist, wobei die eine oder mehreren Planungsstrategien eine oder mehrere vorhersagbare Planungsstrategien sind; und
Signalisieren (920) an einen Transceiver des UE, um die eine oder mehreren PDUs und assoziierte Sequenznummern, SNs, auf der Vielzahl von unteren Verbindungsschichten gemäß der einen oder mehreren vorhersagbaren Planungsstrategien zu empfangen, wobei der eine oder mehreren Prozessoren und Speicher ferner konfiguriert sind, zum Identifizieren einer oder mehrerer fallengelassener PDU-Quellen unter der Vielzahl von unteren Verbindungsschichten basierend auf der einen oder mehreren Planungsstrategien.

6. Vorrichtung nach Anspruch 5, wobei die ein oder mehreren Prozessoren und Speicher ferner konfiguriert sind, um gemäß der einen oder mehreren Planungsstrategien zum:
Signalisieren an einen Transceiver des UE, um vom PDCP des eNodeB die eine oder mehreren PDUs, die ungerade Sequenznummern auf einer ersten der Vielzahl von unteren Verbindungsschichten aufweisen, zu empfangen;
Dekodieren, vom PDCP des eNodeB, die eine oder mehreren PDUs, die gerade Sequenznummern auf einer zweiten der Vielzahl von unteren Verbindungsschichten aufweisen;
Dekodieren der einen oder mehreren PDUs auf einer ersten oder einer zweiten der Vielzahl von unteren Verbindungsschichten, die die gemäß einer Modulo-Operation definierte SNs aufweisen;
Signalisieren an einen Transceiver des UEs, um vom PDCP des eNodeB die einen oder mehreren PDUs auf einer ersten der Vielzahl von unteren Verbindungsschichten, die die SNs aufweisen, die ein Vielfaches einer N festen Zahl sind, zu empfangen, wobei N eine positive ganze Zahl ist;
Signalisieren an einen Transceiver des UE, um vom PDCP des eNodeB die eine oder mehreren PDUs auf einer zweiten der Vielzahl von unteren Verbindungsschichten, die die SNs aufweisen, die ein Vielfaches einer M festen Zahl sind, zu empfangen, wobei M eine positive ganze Zahl ist;
Signalisieren an einen Transceiver des UE, um vom PDCP des eNodeB die eine oder mehreren PDUs auf einer dritten der Vielzahl von unteren Verbindungsschichten, die die SNs aufweisen, die ein Vielfaches einer T festen Zahl sind, zu empfangen, wobei T eine positive ganze Zahl ist;
Signalisieren an einen Transceiver des UE, um vom PDCP des eNodeB eine Planungs-Bitmap für eine X-Zahl der einen oder mehreren PDUs zu empfangen;
Signalisieren an einen Transceiver des UE, um vom PDCP des eNodeB unter Verwendung der Planungs-Bitmap die eine oder mehreren PDUs auf einer ersten der Vielzahl von unteren Verbindungsschichten, die ein X-Bit aufweisen, zu empfangen, wobei X ein Nullwert oder eine positive ganze Zahl ist;
Signalisieren an einen Transceiver des UE, um vom PDCP des eNodeB unter Verwendung der Planungs-Bitmap die eine oder mehreren PDUs auf der einen zweiten der Vielzahl von unteren Verbindungsschichten, die ein X-Bit aufweisen, zu empfangen, wobei Y ein Nicht-Nullwert oder eine positive ganze Zahl ist;
Dekodieren, vom PDCP des eNodeB, jede der einen oder mehreren PDUs auf einer ersten der Vielzahl von unteren Verbindungsschichten und einer zweiten der Vielzahl von unteren Verbindungsschichten; oder Verwerfen, über PDCP des UE, die eine oder mehreren Paketdateneinheiten, PDUs, die ähnliche SNs aufweisen.

7. Vorrichtung nach einem der Ansprüche 5-6, wobei die einen oder mehreren Prozessoren und Speicher ferner konfiguriert sind, zum, gemäß der einen oder mehreren Planungsstrategien, Empfangen, vom PDCP des eNodeB, der einen oder mehreren PDUs auf einer ersten oder einer zweiten der Vielzahl von unteren Verbindungsschichten gemäß einer zeitbasierten Planung.

8. Vorrichtung nach einem der Ansprüche 5-7, wobei die einen oder mehreren Prozessoren und Speicher ferner konfiguriert sind, zum:
Signalisieren an einen Transceiver des UE, um vom PDCP des eNodeB eine Anzeige zu empfangen, um eine ausgewählte der einen oder mehreren Planungsstrategien zu verwenden;
Signalisieren an einen Transceiver des UE, um vom PDCP des eNodeB eine Anzeige zu empfangen, um eine alternative der einen oder mehreren Planungsstrategien unter Verwendung einer Steuer-PDU zu verwenden;
Signalisieren an einen Transceiver des UE, um vom PDCP des eNodeB eine Anzeige zu empfangen, um eine alternative der einen oder mehreren Planungsstrategien gemäß der einen der alternativen der einen oder mehreren Planungsstrategien zu verwenden, die zu einem PDCCPPDCP-PDU-Header hinzugefügt wurden;
Signalisieren an einen Transceiver des UE, um vom PDCP des eNodeB eine Anzeige zu empfangen, um eine alternative der einen oder mehreren Planungsstrategien gemäß der einen der alternativen der einen oder mehreren Planungsstrategien zu verwenden, die zu einem erweiterten PDCP-PDU-Header hinzugefügt wurden; oder
Signalisieren an einen Transceiver des UE, um vom PDCP des eNodeB eine Anzeige zu empfangen, um eine alternative der einen oder mehreren Planungsstrategien zu verwenden, durch Definieren eines oder mehrerer PDCP-Parameter, die mit einer Ressourcenblockkonfiguration assoziiert sind, wobei die Vorrichtung mindestens eines von einer Antenne, einem berührungsempfindlichen Anzeigebildschirm, einem Lautsprecher, einem Mikrofon, einem Grafikprozessor, einem Basisbandprozessor, einem Anwendungsprozessor, internen Speicher, einem nichtflüchtigen Speicherport und Kombinationen davon beinhaltet.

9. Vorrichtung nach einem der Ansprüche 1 bis 8, die konfiguriert ist, zum:
Signalisieren (1030) an einen Transceiver des eNodeB, um an das UE eine Anzeige zu übertragen, um die eine oder mehreren Planungsstrategien zu verwenden;
Verarbeiten (1040) vom UE eine Bestätigung zu, dass das UE die Anzeige empfangen hat.

## Revendications

1. Un appareil d'un eNodeB (112 ; 212), le eNodeB étant configuré pour communiquer avec un équipement utilisateur, UE, (110), l'appareil comprenant un ou plusieurs processeurs et une mémoire configurés pour :
sélectionner (810) une ou plusieurs stratégies de planification pour la communication d'une ou plusieurs unités de données en paquets, PDU, depuis une couche de protocole de convergence de données en paquets, PDCP, vers une pluralité de couches de liaison inférieures pour communication vers l'UE, les une ou plusieurs stratégies de planification étant une ou plusieurs stratégies de planification prévisibles ;
associer (820) chacune des une ou plusieurs PDU à un numéro de séquence, SN ; et
signaler (830) à un émetteur-récepteur de l'eNodeB de transmettre à l'UE les une ou plusieurs PDU et les numéros de séquence, SN, associés sur la pluralité de couches de liaison inférieures en fonction des une ou plusieurs stratégies de planification, une stratégie de planification prévisible étant destinée à permettre à l'UE d'identifier une source de PDU abandonnée parmi la pluralité de couches de liaison inférieures sur la base des une ou plusieurs stratégies de planification prévisibles.

2. L'appareil de la revendication 1, dans lequel les un ou plusieurs processeurs et la mémoire sont en outre configurés pour, en fonction des une ou plusieurs stratégies de planification :
signaler à un émetteur-récepteur de l'eNodeB de transmettre à l'UE sur une première couche de la pluralité de couches de liaison inférieures les une ou plusieurs PDU ayant des numéros de séquence impairs ;
signaler à un émetteur-récepteur de l'eNodeB de transmettre à l'UE sur une seconde couche de la pluralité de couches de liaison inférieures les une ou plusieurs PDU ayant des numéros de séquence pairs ;
signaler à un émetteur de l'eNodeB de transmettre à l'UE sur une première couche ou sur une seconde couche de la pluralité de couches de liaison inférieures les une ou plusieurs PDU ayant des SN définis selon une opération modulo ;
signaler à un émetteur-récepteur de l'eNodeB de transmettre à l'UE sur une première couche de la pluralité de couches de liaison inférieures les une ou plusieurs PDU ayant des SN qui sont un multiple d'un nombre fixe N, N étant un entier positif ;
signaler à un émetteur-récepteur de l'eNodeB de transmettre à l'UE sur une seconde couche de la pluralité de couches de liaison inférieures les une ou plusieurs PDU ayant des SN qui sont un multiple d'un nombre fixe M, M étant un entier positif ; ou
signaler à un émetteur-récepteur de l'eNodeB de transmettre à l'UE sur une troisième couche de la pluralité de couches de liaison inférieures les une ou plusieurs PDU ayant des SN qui sont un multiple d'un nombre fixe T, T étant un entier positif.

3. L'appareil de la revendication 1 ou 2, dans lequel les un ou plusieurs processeurs et la mémoire sont en outre configurés pour, en fonction des une ou plusieurs stratégies de planification :
définir une bitmap de planification pour un nombre X des une ou plusieurs PDU ;
signaler à un émetteur-récepteur de l'eNodeB de transmettre à l'UE, en utilisant la bitmap de planification, sur une première couche de la pluralité de couches de liaison inférieures les une ou plusieurs PDU ayant un bit X, X étant une valeur à zéro ou à un entier positif ;
signaler à un émetteur-récepteur de l'eNodeB de transmettre à l'UE, en utilisant la bitmap de planification, sur une seconde couche de la pluralité de couches de liaison inférieures les une ou plusieurs PDU ayant un bit Y, Y étant une valeur non nulle ou un entier positif ;
signaler à un émetteur-récepteur de l'eNodeB de transmettre à l'UE sur une première couche de la pluralité de couches de liaison inférieures et une seconde couche de la pluralité de couches de liaison inférieures chacune des une ou plusieurs PDU, les une ou plusieurs unités de données en paquets, PDU, ayant des SN semblables étant éliminées par l'UE ; ou
signaler à un émetteur-récepteur de l'eNodeB de transmettre à l'UE sur une première couche ou une seconde couche de la pluralité de couches de liaison inférieures les une ou plusieurs PDU en fonction d'une planification à base temporelle.

4. L'appareil de l'une des revendications 1 à 3, dans lequel les un ou plusieurs processeurs et la mémoire sont en outre configurés pour :
produire des données, comprenant une indication pour indiquer à l'UE l'une sélectionnée des une ou plusieurs stratégies de planification ;
produire des données comprenant une indication pour indiquer à l'UE une modification de l'une des une ou plusieurs stratégies de planification en fonction de l'utilisation d'une PDU de contrôle ;
produire des données comprenant une indication pour indiquer à l'UE ladite une des une ou plusieurs stratégies de planification par ajout de ladite une des une ou plusieurs stratégies de planification à un entête de PDU PDCP ;
produire des données comprenant une indication pour indiquer à l'UE ladite une des une ou plusieurs stratégies de planification par ajout de ladite une des une ou plusieurs stratégies de planification à un entête de PDU PDCP enrichi ; ou
produire des données comprenant une indication pour indiquer à l'UE ladite une des une ou plusieurs stratégies de planification par définition d'un ou plusieurs paramètres de PDCP associés à une configuration de bloc de ressources.

5. Un appareil d'un équipement utilisateur, UE (110), l'UE étant configuré pour utiliser une stratégie de planification optimisée utilisant une agrégation Évolution à long terme, LTE, et réseau d'étendue locale sans fil, WLAN, LWA, avec un eNodeB (112; 212), l'appareil comprenant un ou plusieurs processeurs et une mémoire configurés pour :
traiter (910) une ou plusieurs stratégies de planification, reçues en provenance de l'eNodeB, pour recevoir une ou plusieurs unités de données en paquets, PDU, transmises par l'eNodeB en provenance d'une couche de protocole de convergence de données en paquets, PDCP, vers une pluralité de couches de liaison inférieures pour communication avec l'eNodeB, chacune des une ou plusieurs PDU étant associée à un numéro de séquence, SN, les une ou plusieurs stratégies de planification étant une ou plusieurs stratégies de planification prévisibles ; et
signaler (920) à un émetteur-récepteur de l'UE de recevoir les une ou plusieurs PDU et les numéros de séquence, SN, associés sur la pluralité de couches de liaison inférieures en fonction des une ou plusieurs stratégies de planification prévisibles, les un ou plusieurs processeurs et la mémoire étant en outre configurés pour :
identifier une ou plusieurs sources de PDU abandonnées parmi la pluralité de couches de liaison inférieures sur la base des une ou plusieurs stratégies de planification.

6. L'appareil de la revendication 5, dans lequel les un ou plusieurs processeurs et la mémoire sont en outre configurés pour, en fonction des une ou plusieurs stratégies de planification :
signaler à un émetteur-récepteur de l'UE de recevoir sur une première couche de la pluralité de couches de liaison inférieures en provenance du PDCP de l'eNodeB les une ou plusieurs PDU ayant des numéros de séquence impairs ;
décoder, à partir du PDCP de l'eNodeB, les une ou plusieurs PDU ayant des numéros de séquence impairs sur une seconde couche de la pluralité de couches de liaison inférieures ;
décoder les une ou plusieurs PDU ayant des SN définis en fonction d'une opération modulo sur une première couche ou sur une seconde couche de la pluralité de couches de liaison inférieures ;
signaler à un émetteur-récepteur de l'UE de recevoir, en provenance du PDCP de l'eNodeB, sur une première couche de la pluralité de couches de liaison inférieures les une ou plusieurs PDU ayant des SN qui sont un multiple d'un nombre fixe N, N étant un entier positif ;
signaler à un émetteur-récepteur de l'UE de recevoir, en provenance du PDCP de l'eNodeB, sur une seconde couche de la pluralité de couches de liaison inférieures les une ou plusieurs PDU ayant des SN qui sont un multiple d'un nombre fixe M, M étant un entier positif ;
signaler à un émetteur-récepteur de l'UE de recevoir, en provenance du PDCP de l'eNodeB, sur une troisième couche de la pluralité de couches de liaison inférieures les une ou plusieurs PDU ayant des SN qui sont un multiple d'un nombre fixe T, T étant un entier positif ;
signaler à un émetteur-récepteur de l'UE de recevoir, en provenance du PDCP de l'eNodeB, une bitmap de planification pour un nombre X des une ou plusieurs PDU ;
signaler à un émetteur-récepteur de l'UE de recevoir, en provenance du PDCP de l'eNodeB, en utilisant la bitmap de planification, sur une première couche de la pluralité de couches de liaison inférieures les une ou plusieurs PDU ayant un bit X, X étant une valeur à zéro ou un entier positif ;
signaler à un émetteur-récepteur de l'UE de recevoir, en provenance du PDCP de l'eNodeB, en utilisant la bitmap de planification, sur une seconde couche de la pluralité de couches de liaison inférieures les une ou plusieurs PDU ayant un bit Y, Y étant une valeur non nulle ou un entier positif ;
décoder, à partir du PDCP de l'eNodeB, chacune des une ou plusieurs PDU sur une première couche de la pluralité de couches de liaison inférieures et une seconde couche de la pluralité de couches de liaison inférieures ;
ou éliminer, via le PDCP de l'UE, les une ou plusieurs unités de données en paquets, PDU, ayant des SN semblables.

7. L'appareil de l'une des revendications 5 à 6, dans lequel les un ou plusieurs processeurs et la mémoire sont en outre configurés pour, en fonction des une ou plusieurs stratégies de planification, recevoir, en provenance du PDCP de l'eNodeB, les une ou plusieurs PDU sur une première couche ou une seconde couche de la pluralité de couches de liaison inférieures en fonction d'une planification à base temporelle.

8. L'appareil de l'une des revendications 5 à 7, dans lequel les un ou plusieurs processeurs et la mémoire sont en outre configurés pour :
signaler à un émetteur-récepteur de l'UE de recevoir, en provenance du PDCP de l'eNodeB, une indication d'utiliser une stratégie sélectionnée des une ou plusieurs stratégies de planification ;
signaler à un émetteur-récepteur de l'UE de recevoir, en provenance du PDCP de l'eNodeB, une indication d'utiliser une stratégie de substitution des une ou plusieurs stratégies de planification en utilisant une PDU de contrôle ;
signaler à un émetteur-récepteur de l'UE de recevoir, en provenance du PDCP de l'eNodeB, une indication d'utiliser une stratégie de substitution des une ou plusieurs stratégies de planification en fonction de ladite une stratégie de substitution des une ou plusieurs stratégies de substitution, par ajout à un entête de PDU PDCP ;
signaler à un émetteur-récepteur de l'UE de recevoir, en provenance du PDCP de l'eNodeB, une indication d'utiliser une stratégie de substitution des une ou plusieurs stratégies de planification en fonction de ladite une stratégie de substitution des une ou plusieurs stratégies de planification, par ajout à un entête de PDU PDCP enrichi, ; ou
signaler à un émetteur-récepteur de l'UE de recevoir, en provenance du PDCP de l'eNodeB, une indication d'utiliser une stratégie de substitution des une ou plusieurs stratégies de planification, par définition d'un ou plusieurs paramètres PDCP associés à une configuration de bloc de ressources,
l'appareil comprenant en outre au moins un parmi une antenne, un écran afficheur sensible au toucher, un haut-parleur, un microphone, un processeur graphique, un processeur de bande de base, un processeur applicatif, une mémoire interne, un port de mémoire non volatile, et des combinaisons des précédents.

9. L'appareil de l'une des revendications 1 à 8 configuré pour :
signaler (1030) à un émetteur-récepteur de l'eNodeB de transmettre à l'UE une indication d'utiliser les une ou plusieurs stratégies de planification ;
traiter (1040), depuis l'UE, un accusé de réception indiquant que l'UE a reçu l'indication.
